# EUROPÄISCHE PATENTSCHRIFT

(11) **EP 2 996 856 B1**
(45) Veröffentlichungstag und Bekanntmachung des Hinweises auf die Patenterteilung: **10.06.2020**
(21) Anmeldenummer: 14720588.4
(22) Anmeldetag: 28.04.2014
(51) Int. Cl.: B29C 44/34, B29C 48/38, B29C 48/36, B29C 48/42

(54) **VERFAHREN ZUR HERSTELLUNG EINES SCHAUMKÖRPERS DURCH EXTRUSION UND EXTRUSIONSVORRICHTUNG ZUR HERSTELLUNG EINES SCHAUMKÖRPERS**
METHOD FOR PRODUCING A FOAM BODY BY MEANS OF AN EXTRUSION PROCESS, AND EXTRUSION DEVICE FOR PRODUCING A FOAM BODY
PROCÉDÉ DE FABRICATION D'UN CORPS ALVÉOLAIRE PAR EXTRUSION ET DISPOSITIF D'EXTRUSION POUR FABRIQUER UN CORPS ALVÉOLAIRE

(30) Priorität: 14.05.2013 DE 102013008202
(43) Veröffentlichungstag der Anmeldung: 23.03.2016
(73) Patentinhaber: VAN LÜCK, Frank, D-41564 Kaarst (DE); Gneuss GmbH, 32549 Bad Oeynhausen (DE)
(72) Erfinder: VAN LÜCK, Frank, 47877 Willich (DE)
(74) Vertreter: Abel, Martin
(86) Internationale Anmeldenummer: PCT/EP2014/058634
(87) Internationale Veröffentlichungsnummer: WO 2014/183985

(56) Entgegenhaltungen:
- EP-A1- 1 230 296
- EP-A2- 0 694 376
- EP-A2- 0 818 292
- WO-A1-2008/075941
- DE-A1- 4 431 913
- GB-A- 2 179 886
- US-A- 3 850 414
- US-A- 5 215 764
- US-A- 6 062 718

## Beschreibung

Die Erfindung betrifft das Gebiet der Schaumextrusion und insbesondere die Herstellung von Kunststoffschaum mittels Tandemextrusionsanlagen.

Es ist bekannt, Schaumstoffkörper herzustellen mittels eines ersten Extruders, der eine Kunststoffschmelze aus Kunststoffgranulat erzeugt, und mittels eines nachgeschalteten zweiten Extruders, der diese Kunststoffschmelze erhält, thermisch verändert und durch eine Auslassdüse presst. Der Kunststoffschmelze wird Treibmittel zugesetzt, welches maßgeblich zur Expansion der Kunststoffschmelze bei Austritt aus der Auslassdüse beiträgt.

Für zahlreiche Anwendungen ist es vorteilhaft, den Schaumstoffkörper mit möglichst homogenen mechanischen Eigenschaften auszubilden, wobei diese Eigenschaften maßgeblich mit der Anordnung und Geometrie der Zellen verknüpft sind, die durch die Expansion des Treibmittels entstehen. Daher wird üblicherweise der Schaumstoffkörper nachbehandelt, um die Zellstrukturen zu homogenisieren, wobei hierzu z.B. Verfahren aus dem Bereich des Thermoformens bekannt sind oder der Schaumstoffkörper in bekannter Weise zur Nachexpansion erwärmt und/oder gelagert wird.

Die Druckschrift GB 2179886 A beschreibt einen Mischer, der sich einem Aufschmelzextruder und einem Kühlextruder befindet. In den Aufschmelzextruder wird Treibmittel eingebracht, nachdem Kunststoffgranulat in diesem aufgeschmolzen wurde. Der Kühlextruder gibt Kunststoffschaum aus einem Werkzeug ab. Der Kühlextruder weist eine Schnecke auf, die die Schmelze transportiert und kühlt.

Die Druckschrift EP 0 818 292 A2 beschreibt ein Schäumungsverfahren für Kunststoff, wobei in einem ersten Extruder Kunststoffschmelze mit Kohlendioxid oder Stickstoff als Treibmittel, das sich in überkritischem Zustand und unter hohem Druck befindet, versetzt wird. Es werden Zellkeime gebildet durch schnelles Abkühlen der Schmelze. Ein nachgeschalteter zweiter Extruder kann verwendet werden, um die Schmelze zu kühlen. Falls der erste Extruder ausreichend kühlt, kann der zweite Extruder weggelassen werden.

Die Druckschrift DE 44 31 913 A1 beschreibt ein Verfahren zur Herstellung von Kunststoffschaum, wobei in unterschiedlichen Extrudern unterschiedliche Treibmittel der Kunststoffschmelze zugeführt werden, um die Schmelze einem gemeinsamen Extruder zuzuführen. Der gemeinsame Extruder bewirkt eine Homogenisierung und hat ferner die Aufgabe, die Kunststoffschmelze, die dem gemeinsamen Extruder zugeführt wird, auf eine Temperatur zu kühlen, die zu einer Viskosität führt, die zum Schäumen geeignet ist.

Die Druckschrift EP 0 694 376 A2 beschreibt ein Verfahren zur Herstellung von Kunststoffschaum mittels eines Primärextruders, der Schmelze einem Sekundär zuführt. Der Sekundärextruder weist eine Knetzone auf, auf die eine Zumessungszone und eine Hilfs-Zumessungszone folgt. In dem Sekundärextruder wird die Schmelze auf eine Temperatur gebracht, die für das Schäumen geeignet ist und der Schmelze wird Treibmittel zugeführt. Der zweite Extruder weist einen Schmelzezuführungsabschnitt, einen Knetabschnitt und einen Bemessungsabschnitt in dieser Reihenfolge auf, wobei auf den Bemessungsabschnitt eine Ausgabedüse folgt.

Die Druckschrift 6,062,718 A beschreibt eine Schaumextrusionsanlage mit einem Mischabschnitt, in dem Kunststoffmaterial aufgeschmolzen und mit einem Treibmittel gemischt wird. Ferner ist ein Wärmeabgabeabschnitt in einem nachgeschalteten Extruder vorgesehen.

Die Druckschriften EP 1 230 296 A0, US 5,215,764 A und WO 2008/075941 A1 beschreiben Extrudervorrichtungen mit Schnecken, die unterschiedliche Abschnitte aufweisen. Die unterschiedlichen Abschnitte sind mit unterschiedlichen Funktionen verknüpft, etwa mit Mischen einerseits und Pumpen andererseits. Etwa in der EP 1 230 296 A0 ist beschrieben, eine Mischereinheit dem Extruder nachzuschalten, welche einen Druckverlust erzeugt und Kunststoffschmelze an ein Düsenwerkzeug abgibt. Die Druckschrift US 5,215,764 A, welche wie die Druckschrift WO 2008/075941 A1 keinen Bezug zur Erzeugung von Kunststoffschaum hat, beschreibt hingegen eine Extrudervorrichtung mit einer Schraube, die an einem Ende einen Zufuhrabschnitt für Kunststoffgranulat aufweist, während das entgegengesetzte Ende der Schraube die Schmelze abgibt.

Da bislang bekannte Nachbehandlungsprozesse den Wunsch nach einer homogenen Schaumstoffstruktur nicht vollständig befriedigen, ist es eine Aufgabe der Erfindung, eine Herangehensweise aufzuzeigen, mit der sich dieses Ziel zumindest teilweise erfüllen lässt.

### Offenbarung der Erfindung

Diese Aufgabe wird gelöst durch das Verfahren und die Extrusionsvorrichtung gemäß den unabhängigen Ansprüchen. Vorteilhafte Ausführungsformen ergeben sich mit den abhängigen Ansprüchen.

Die hier beschriebene Herangehensweise ermöglicht, dass die Kunststoffschmelze, welche durch eine Auslassdüse geführt wird, eine geringe Temperaturdifferenz über den Querschnitt der Kunststoffschmelze aufweist, wodurch der Expansionsprozess an der Auslassdüse über den Querschnitt der Auslassdüse ebenso homogen ausgeführt wird. Die Expansion ist verknüpft mit der Temperatur, so dass eine homogene Temperatur der Kunststoffschmelze an der Auslassdüse zu einer homogenen Zellenbildung führt, wodurch die Größe der durch die Expansion entstehenden Zellen bereits an der Auslassdüse deutlich geringer streut als bei inhomogeneren Temperaturverteilungen, wie sie bei üblichen Verfahren auftreten. Dadurch hat der bereits an der Auslassdüse erhaltene geschäumte Kunststoffkörper eine homogene Struktur, weitere gegebenenfalls durchgeführte Nachbehandlungen des Kunststoffkörpers (zur weiteren Homogenisierung der Struktur wie Erwärmen, Thermoformen und Lagern) bauen somit auf einer homogeneren Struktur auf, als es bei herkömmlichen Verfahren der Fall ist. Es lassen sich somit gegenüber bekannten Verfahren Kunststoffkörper mit einer geringeren Dickenvarianz und einem homogeneren Eigenschaftsprofil erzeugen, wobei ferner Zellgrößenunterschiede von Randschichten des Kunststoffkörpers gegenüber dem Inneren des Kunststoffkörpers mit der hier beschriebenen Herangehensweise im Vergleich zu bekannten Verfahren reduziert sind. Die hier beschriebene Herangehensweise setzt somit bereits bei dem Expansionsprozess an der Auslassdüse an, so dass bereits mit einem homogener geschäumten Kunststoffkörper eine etwaige Nachbehandlung durchgeführt werden kann, so dass die Nachbehandlung zu homogeneren Strukturen führt als bei bekannten Verfahren. Die thermische Homogenisierung der Temperaturverteilung über den Querschnitt der Kunststoffschmelze, die (im Wesentlichen mit dieser homogenisierten Temperaturverteilung) der Auslassdüse zur Expansion der Kunststoffschmelze zugeführt wird, kann auf vielerlei Arten realisiert werden, wie im Folgenden dargelegt ist.

Es wird daher gemäß einem Aspekt der Erfindung ein Verfahren zur Herstellung eines Schaumkörpers durch Extrusion beschrieben. Es wird eine Kunststoffschmelze innerhalb eines Mantels eines ersten Extruders erzeugt. Hierzu wird Kunststoff - etwa in Granulatform - dem ersten Extruder zugeführt. Der Kunststoff kann beim Zuführen in den ersten Extruder bereits mit einem oder mit mehreren Zusätzen und/oder Treibmittel versetzt sein, wobei ein oder mehrere Zusätze und/oder das Treibmittel auch nach dem Zuführen des Kunststoffs in den ersten Extruder dem Kunststoff beziehungsweise der daraus entstehenden Kunststoffschmelze zugesetzt werden können, beispielsweise durch Zuführen des zumindest einen Zusatzes und/oder Treibmittels in den ersten Extruder oder in verfahrensgemäß verwendete Komponenten, die auf den ersten Extruder folgen. Das Treibmittel wird vorzugsweise innerhalb des Schritts des Erzeugens der Kunststoffschmelze (im ersten Extruder) der Kunststoffschmelze zugeführt, wobei abhängig von der Anwendung das Treibmittel der Kunststoffschmelze in einer Schmelzeleitung zugeführt werden kann, die den ersten Extruder mit einem nachgeschalteten zweiten Extruder verbindet.

Der Kunststoff kann auch als Kunststoffedukt oder Kunststoffeduktmischung zugeführt werden, wobei das Kunststoffedukt oder die Kunststoffeduktmischung durch Polymerisation bzw. Polykondensation zu dem Kunststoff bzw. zu der Kunststoffschmelze umgewandelt wird, insbesondere in dem ersten Extruder. Das Erzeugen der Kunststoffschmelze kann somit ein Aufschmelzen und/oder eine Umwandlung eines Kunststoffedukts oder einer Kunststoffeduktmischung umfassen, insbesondere innerhalb des ersten Extruders und/oder in einer Zuführung, die zu dem ersten Extruder führt.

Ferner kann das Erzeugen der Kunststoffschmelze ein Zuführen zumindest eines Treibmittels und/oder von zumindest einem Zusatz zu der Kunststoffschmelze umfassen. Als Zusätze können etwa Antistatika, Stabilisatoren, Farbstoffe, Füllstoffe, Flammschutzmittel und/oder Keimbildner zugesetzt werden. Als Treibmittel eignen sich feste und flüssige Stoffe, die beim Führen der Kunststoffschmelze, die mit dem mindestens einen Treibmittel versetzt sind, expandieren (durch chemische Reaktionen und/oder durch physikalische Expansion), etwa durch zumindest teilweisen Übergang in eine gasförmige Phase. Es können auch bei Umgebungsbedingungen gasförmige Stoffe in flüssiger oder gasförmiger Form als Treibmittel zugesetzt werden, die aufgrund der Entspannung der Kunststoffschmelze an der Auslassdüse weiter expandieren und dadurch die Zellen des geschäumten Kunststoffkörpers bilden. Als Treibmittel eignen sich etwa Ether, Kohlenwasserstoffe, Ketone, Ester, Klimaanlagengase der 3. und 4. Generation (Hydrofluorocarbone, HCOs und Hydrofluoroolefine, HFOs), Kohlendioxid oder andere Gase wie Stickstoff. Das Treibmittel kann insbesondere als Treibmittellösung zugeführt werden.

Als Kunststoffe zur Erzeugung der Kunststoffschmelze eignen sich insbesondere Thermoplaste, etwa Polyethen, Polypropen, Polystyrol, Polyvinylchlorid, Polyacrylnitril, Polyamide, Polyester, Polyacrylate, ein oder mehrere Biokunststoffe (Polymilchsäure, Celluloseprodukte, Stärke, thermoplastische Stärke), Mischungen mehrerer unterschiedlicher Thermoplaste oder Mischungen von sich chemisch entsprechenden Thermoplasten, jedoch unterschiedlichen Typs. Insbesondere können Recycle-Kunststoffe verwendet werden. Der Kunststoff wird als Granulat oder Pulver dem ersten Extruder zugeführt, um die Kunststoffschmelze in dem ersten Extruder zu erzeugen, oder wird als Edukt oder Eduktmischung zugeführt, aus dem bzw. aus der die Kunststoffschmelze durch chemische Reaktion erzeugt wird. In dem ersten Extruder wird die Kunststoffschmelze insbesondere aufbereitet, weshalb der erste Extruder auch als Aufbereitungsextruder bezeichnet werden kann.

Die Kunststoffschmelze wird zu einer Auslassdüse gefördert. Diese Auslassdüse ist insbesondere eine Auslassdüse eines zweiten Extruders. Dieser ist dem ersten Extruder nachgeschaltet, entweder direkt über eine Schmelzeleitung oder über einen weiteren Extruder, der als Verbindungsextruder bezeichnet werden kann. Die zu der Auslassdüse geförderte Kunststoffschmelze weist das mindestens eine Treibmittel auf (sowie ggf. zumindest einen weiteren Zusatz). Die Kunststoffschmelze kann wie oben beschrieben mit dem mindestens einen Treibmittel versetzt werden. Die Kunststoffschmelze expandiert, nachdem diese durch die Auslassdüse geführt wurde, insbesondere aufgrund der Entspannung, die beim Durchtritt durch die Auslassdüse eintritt. (Die Entspannung entspricht bzw. resultiert aus der Druckdifferenz vom Extruderinnenraum gegenüber dem Umgebungsdruck). Das Expandieren der Kunststoffschmelze tritt auf nach dem Führen durch die Auslassdüse sowie gegebenenfalls auch während dem Führen der Kunststoffschmelze durch die Auslassdüse. Die Kunststoffschmelze wird insbesondere durch Expandieren des zumindest einen Treibmittels zur Expansion gebracht, wobei das Treibmittel an Volumen zunimmt durch die Druckabnahme in der Kunststoffschmelze während dem Durchtritt durch die Auslassdüse, wobei dies insbesondere mit einem Phasenwechsel des Treibmittels hin zu einer gasförmigen Phase verbunden ist. Die Kunststoffschmelze wird insbesondere durch zumindest einen Spalt der Auslassdüse geführt, um eine geschäumte Kunststofflage als geschäumter Kunststoffkörper zu erzeugen. Der Spalt kann entlang einer geschlossenen Linie verlaufen, etwa entlang einem Kreis, einem Oval oder einem Polygon. Der Spalt, durch den die Kunststoffschmelze geführt wird, kann ferner einen rechteckigen Querschnitt haben, insbesondere einen flachen rechteckigen Querschnitt, etwa mit einem Seitenverhältnis von mindestens 1:5, 1:10, 1:15, 1:20, 1:50 oder mehr. Der geschäumte Kunststoffkörper kann somit in Form einer umfänglich geschlossenen Hülle oder in Form einer flachen Lage bzw. als Folie (mit einem Seitenverhältnis wie vorangehend beschrieben) aus der Auslassdüse treten.

Um eine homogen verteilte Zellgröße in dem Kunststoffkörper zu erhalten, ist vorgesehen, dass dem Führen der Kunststoffschmelze durch die Auslassdüse hindurch die Temperaturverteilung über den Querschnitt der Kunststoffschmelze homogenisiert wird. Diese derart thermisch homogenisierte Kunststoffschmelze wird durch die Auslassdüse geführt. Die Verringerung der Temperaturunterschiede wird somit auch als thermische Homogenisierung bezeichnet.

Die Temperaturunterschiede zwischen unterschiedlichen Positionen im Querschnitt, insbesondere zwischen unterschiedlichen Radialpositionen im Querschnitt der Kunststoffschmelze werden verringert, vorzugsweise auf eine maximale Temperaturdifferenz von nicht mehr als 8 °C oder 5 °C, vorzugsweise nicht mehr als 2 °C und insbesondere von nicht mehr als 1 °C. Die maximale Temperaturdifferenz entspricht der höchsten Temperatur der Kunststoffschmelze abzüglich der geringsten Temperatur der Kunststoffschmelze innerhalb des gleichen Querschnitts der Kunststoffschmelze. Die Differenz der kältesten Stelle und der wärmsten Stelle im Querschnitt der Kunststoffschmelze ist somit nicht größer als die genannte Temperaturdifferenz. Diese Temperaturdifferenz bezieht sich vorzugsweise auf den Querschnitt der Kunststoffschmelze unmittelbar vor der Auslassdüse und kann sich ferner auf den Querschnitt der Kunststoffschmelze vor diesem Abschnitt beziehen, insbesondere auf den Querschnitt der Kunststoffschmelze an oder unmittelbar nach der Stelle (bezogen auf die Förderrichtung der Kunststoffschmelze), an der die Temperaturunterschiede der Kunststoffschmelze verringert werden. Vorzugsweise wird zwischen der Stelle, an der die Temperaturunterschiede im Querschnitt der Kunststoffschmelze verringert werden, und der Auslassdüse die Streuung der Temperaturverteilung über den Querschnitt nicht vergrößert. Vor dem Führen der Kunststoffschmelze durch die Auslassdüse wird somit die Streuung der Temperatur über den Querschnitt verringert. Als Radialposition werden Positionen bezeichnet, die durch den Abstand zu einer Mittennormalen des Querschnitts definiert sind. Kunststoffschmelzeanteile unterschiedlicher Radialposition haben unterschiedliche Abstände zur Mittennormalen des Querschnitts.

Der zweite Extruder und insbesondere dessen Extruderschneckenvorrichtung weist erste und zweite Längsabschnitte auf, die unterschiedliche Mischeigenschaften bzw. Fördereigenschaften haben. Die ersten und zweiten Längsabschnitte fördern bzw. sind hierzu ausgestaltet, etwa indem diese (vorzugsweise durchgängige oder auch nur teilweise durchbrochene) Schneckengänge aufweisen. Die ersten Längsabschnitte sind insbesondere zum Mischen ausgestaltet und weisen beispielsweise Durchmischungsstrukturen auf, und sind vorzugsweise dadurch zum Mischen ausgestaltet, dass sie unterbrochene Schneckengänge aufweisen und/oder andere Mischstrukturen haben, etwa Paddel oder Schneckengänge mit Löchern. Die zweiten Längsabschnitte sind insbesondere zum Druckaufbau ausgestaltet, um Druckverluste etwa durch die ersten Abschnitte oder durch andere Durchmischungsstrukturen teilweise oder vollständig ausgleichen zu können. Hierzu können die zweiten Längsabschnitte durchgehende oder vorzugsweise unterbrochene Schneckengänge aufweisen. Bevorzugt ist der Abschnitt vor der Auslassdüse ein erster Längsabschnitt.

Erste und zweite Längsabschnitte (des gleichen Extruders bzw. der gleichen Extruderschneckenvorrichtung) wechseln sich ab. Vorzugsweise sind mehrere (d.h. zwei oder mehr) erste Längsabschnitte in einem Extruder vorgesehen (insbesondere im zweiten Extruder). Ferner sind vorzugsweise mehrere (d.h. zwei oder mehr) zweite Längsabschnitte in einem Extruder (d.h. in dem gleichen Extruder) vorgesehen (insbesondere im zweiten Extruder). Zwischen ersten und zweiten Längsabschnitten (der gleichen Extruderschneckenvorrichtung bzw. des gleichen Extruders) sind insbesondere keine Übergänge ohne Schneckengang vorgesehen. Die Längsabschnitte folgen vorzugsweise unmittelbar aufeinander, wobei dies insbesondere für den gleichen Extruder bzw. die gleiche Extruderschneckenvorrichtung gilt. Die ersten und zweiten Längsabschnitte, durch die abwechselnd Kunststoffschmelze geführt wird, grenzen unmittelbar aneinander. Da die Längsabschnitte auch die Reihenfolge der Bearbeitungsschritte der Kunststoffschmelze wiedergeben, folgen Schritte des Mischens und Schritte des Druckaufbaus im zweiten Extruder aufeinander, vorzugsweise abwechselnd und insbesondere unmittelbar. Auch im ersten Extruder oder in einem Verbindungsextruder zwischen dem ersten und dem zweiten Extruder kann zumindest einer der Längsabschnitte vorgesehen sein, vorzugsweise erste und zweite Längsabschnitte. Auch im ersten Extruder oder in dem Verbindungsextruder wird die Kunststoffschmelze gefördert. Insbesondere wird dort ferner gemischt oder Druck aufgebaut oder beides, vorzugsweise mehrfach und insbesondere im Wechsel.

Zwischen Längsabschnitten unterschiedlicher Extruder kann eine Verbindung vorgesehen sein, so dass sich keine unmittelbare Folge von Längsabschnitten ergibt. Auch der erste Extruder kann erste bzw. zweite Längsabschnitte aufweisen, vorzugsweise wie hierfür den zweiten Extruder beschrieben ist.

Die ersten und zweiten Längsabschnitte der Extruderschneckenvorrichtung, insbesondere dergleichen Extruderschneckenvorrichtung, grenzen insbesondere unmittelbar aneinander. Entlang des ersten, des zweiten und vorzugsweise beider Längsabschnitte der Extruderschneckenvorrichtung erstreckt sich der Schneckengang der Extruderschneckenvorrichtung. Der Schneckengang kann durchgängig sein, aneinandergrenzende durchgängige Schneckengangabschnitte aufweisen oder kann zumindest einen Schneckengang oder zumindest einen Schneckengangabschnitt aufweisen, an den eine Durchmischungsstruktur angrenzt, oder die Schneckengangabschnitte überbrückt. Die Durchmischungsstruktur kann in Umlaufrichtung unterbrochene (und unmittelbar aneinandergrenzende) Schneckengänge aufweisen und/oder andere Mischstrukturen aufweisen, etwa Paddel oder Schneckengänge mit Löchern.

Die Extruderschneckenvorrichtung weist somit zum Mantel des betreffenden Extruder weisende Kanten auf, die bis zum Mantel reichen. Falls die Extruderschneckenvorrichtung eine Durchmischungsstruktur aufweist, so hat diese Kanten, zum Mantel des Extruders reicht. Die Kanten der Durchmischungsstruktur sind in Umlaufrichtung versetzt zueinander oder verlaufen in Umlaufrichtung kontinuierlich. Die Kanten der Durchmischungsstruktur sind insbesondere in Längsrichtung des Extruders nicht zueinander versetzt. Bei einer Extruderschneckenvorrichtung, die einen durchgängigen Schneckengang aufweist, bildet dieser Gang eine zum Mantel des Extruders weisende Kante auf, die bis zum Mantel reicht. Die Extruderschneckenvorrichtung weist somit eine oder mehrere Kanten auf, die bis zum Mantel reichen, und die im Längsschnitt des Extruders kontinuierlich oder unmittelbar aneinandergrenzend verlaufen.

Die Extruderschneckenvorrichtung hat eine Einhüllende (die sich durch Rotation der Extruderschneckenvorrichtung ergibt), die im Wesentlichen über die gesamte Länge der Extruderschneckenvorrichtung an den Mantel des Extruders reicht. Der Schneckengang, die Schneckengangabschnitte und/oder die Durchmischungsstruktur (d.h. alle Schneckengänge, Schneckengangabschnitte und/oder Durchmischungsstruktur) haben eine gemeinsame Einhüllende, die im Wesentlichen über die gesamte Länge der Extruderschneckenvorrichtung an den Mantel des Extruders reicht. Hierbei können insbesondere die Endabschnitte der Extruderschneckenvorrichtung diese Eigenschaft nicht aufweisen. Mit einer Einhüllenden, die bis zum Mantel des Extruders reicht, ergeben sich nur geringe Leervolumina, geringe Verweilzeiten und insbesondere kein Bereich, an dem sich Ablagerungen ansammeln können. Der betreffende Extruder hat somit keinen Bereich, an dem keine Kante der Extruderschneckenvorrichtung bis zum Mantel reicht.

Es ist ferner vorgesehen, dass Anteile der Kunststoffschmelze, die an unterschiedlichen Radialpositionen vorliegen, gemischt werden, bevor die Kunststoffschmelze dem zweiten Extruder zugeführt wird. Die Anteile können vor dem Zuführen zu dem zweiten Extruder in dem ersten Extruder (und/oder in einem Verbindungsextruder oder einer Schmelzeleitung, die den ersten Extruder mit dem zweiten Extruder verbindet) gemischt werden, vorzugsweise mittels einer Homogenisierungsvorrichtung. Diese Homogenisierungsvorrichtung kann von einer Extruderschneckenvorrichtung des ersten Extruders gebildet werden, insbesondere von einem ersten Längsabschnitt hiervon. Die Homogenisierungsvorrichtung kann ferner von einem Längsabschnitt eines Verbindungsextruders zwischen dem ersten und dem zweiten Extruder vorgesehen werden, insbesondere von einem Längsabschnitt des Verbindungsextruders, der wie der erste Längsabschnitt ausgebildet ist. Die Homogenisierungsvorrichtung kann ferner von Mischeelementen innerhalb einer Schmelzeleitung zwischen dem ersten und dem zweiten Extruder vorgesehen werden.

Es kann vorgesehen sein, dass die Anteile (der Kunststoffschmelze an unterschiedlichen Radialpositionen) vor dem Zuführen zu dem zweiten Extruder gemischt werden in einer Schmelzeleitung, insbesondere in der vorangehend genannten Schmelzeleitung. Durch diese wird die Kunststoffschmelze von dem ersten Extruder zu dem zweiten Extruder geführt. In der Schmelzeleitung sind Mischelemente vorgesehen, die die Anteile in der Schmelzeleitung vermischen. Die Schmelzeleitung kann zudem eine Temperierungsvorrichtung aufweisen, die Wärme aus in der Schmelzeleitung befindliche Kunststoffschmelze aufnimmt oder dieser zuführt. Die Mischelemente können temperierbar ausgeführt sein und insbesondere einen Wärmemediumkanal oder Heizelemente, vorzugsweise elektrische Heizelemente, aufweisen. Dadurch kann mittels eines Wärmemediums oder mittels elektrischen Stroms die Temperatur der Mischelemente beeinflusst werden, so dass diese wiederum die Schmelzetemperatur beeinflussen können. Der Wärmemediumkanal oder die Heizelemente erstrecken sich im Inneren des Mischelements und sind vorzugsweise vom Innenraum getrennt, in den die Mischelemente hineinragen.

Weiterhin können die Anteile der Kunststoffschmelze, die an unterschiedlichen Radialpositionen vorliegen, vor dem Zuführen zu dem zweiten Extruder gemischt werden in einem Verbindungsextruder, insbesondere in dem voranstehend erwähnten Verbindungsextruder. Dieser fördert die Kunststoffschmelze von dem ersten Extruder zu dem zweiten Extruder. Ferner kann der Verbindungsextruder eingerichtet sein, die Kunststoffschmelze mittels mehrerer Schneckenspindeln zu fördern. Diese sind parallel zueinander und insbesondere koaxial zur Längsachse des Verbindungsextruders um diese Längsachse verteilt.

Ferner kann vorgesehen sein, dass in dem ersten und/oder in dem zweiten Extruder die Kunststoffschmelze mittels mehrerer Schneckenspindeln gefördert wird. Diese sind koaxial zur Längsachse des ersten bzw. zweiten Extruders verteilt.

Ein weiterer Aspekt ist die Verringerung des Temperaturunterschieds zwischen Anteilen der Kunststoffschmelze, die sich an unterschiedlichen Querschnittspositionen der Kunststoffschmelze befindet, durch Mischen dieser Anteile vor der Zuführung der Kunststoffschmelze zu der Auslassdüse. Insbesondere wird unmittelbar der Abgabe der Kunststoffschmelze in die Auslassdüse diese gemischt oder (unmittelbar) vor dem Zuführen der Kunststoffschmelze zu der Auslassdüse gemischt.

Es ist daher vorgesehen, dass Anteile der Kunststoffschmelze, die an unterschiedlichen Radialpositionen vorliegen, gemischt werden, bevor die Kunststoffschmelze durch die Auslassdüse des zweiten Extruders tritt. Hierbei können die Anteile vor dem Zuführen zu der Auslassdüse in dem zweiten Extruder mittels einer Homogenisierungsvorrichtung einer Extruderschneckenvorrichtung des zweiten Extruders gemischt werden. Hierbei mischt diejenige Extruderschneckenvorrichtung, an welche die Kunststoffschmelze von dem ersten Extruder bzw. von einer Schmelzeleitung oder von einem Verbindungsextruder dem zweiten Extruder zugeführt wird. Der zweite Extruder kann mehrgliedrig sein und einen ersten Abschnitt mit der voranstehend genannten Extruderschneckenvorrichtung umfassen, sowie einen Endabschnitt mit der Auslassdüse, einer (optionalen) Verbindung, die der Auslassdüse unmittelbar vorangeht, und einem Mischer, der der Auslassdüse und ggf. der Verbindung unmittelbar vorangeht. Die Verbindung kann eine (weitere) Schmelzeleitung oder einen (weiteren) Verbindungsextruder umfassen oder im Wesentlichen aus dieser Schmelzeleitung oder dem Verbindungsextruder bestehen (abgesehen von Sensoren, Temperierungseinrichtungen, etc.). Der weitere Verbindungsextruder und der erste Abschnitt des zweiten Extruders können getrennte oder unterschiedliche Extruderschneckenvorrichtungen aufweisen oder Abschnitte einer Extruderschneckenvorrichtungen, die unterschiedlich sind. Der erste Abschnitt stößt unmittelbar an diesen Endabschnitt heran. Da der zweite Extruder mehrgliedrig sein kann, kann dieser auch als zweite Extruderanordnung bezeichnet werden. Dies gilt für das hier beschriebene Verfahren wie auch für die hier beschriebene Extrusionsvorrichtung.

Es kann vorgesehen sein, dass die Anteile vor dem Zuführen zu der Auslassdüse gemischt werden in einer Verbindung, durch die die Kunststoffschmelze der Auslassdüse dem zugeführt wird, insbesondere in einer Verbindung die wie die vorangehend genannte Verbindung ausgestaltet ist. In der Verbindung können Mischelemente vorgesehen sein, die die Anteile Verbindung vermischen. Diese Mischelemente können statisch mit der restlichen Verbidung verbunden sein oder können angetrieben sein, insbesondere als eine Extruderschneckenvorrichtung in dieser Verbindung. Die Verbindung kann daher insbesondere als (zusätzliche) Schmelzeleitung oder als Verbindungsextruder vorgesehen sein oder als Mischer. Die Verbindung kann eine Temperierungsvorrichtung aufweisen, die Wärme aus in der Verbindung befindliche Kunststoffschmelze aufnimmt oder dieser zuführt, wobei die Verbindung insbesondere als Schmelzeleitung ausgebildet ist.

Zudem kann vorgesehen sein, dass die Anteile vor dem Zuführen der Auslassdüse gemischt werden in der Verbindung. Diese kann als ein Verbindungsextruder als Teil eines Endabschnitts des zweiten Extruders ausgebildet sein. Die Verbindung führt die Kunststoffschmelze von demjenigen Abschnitt des zweiten Extruder, welcher sich vor dem Endabschnitt befindet (d.h. von dem ersten Abschnitt des zweiten Extruders), der Auslassdüse zu. Die Verbindung gehört (wie auch die Auslassdüse) dem Endabschnitt des zweiten Extruders an. Innerhalb der Verbindung fördert eine Extruderschneckenvorrichtung, insbesondere mit mehreren Schneckenspindeln wie hierin beschrieben, die Kunststoffschmelze. Diese kann eine Extruderschneckenvorrichtung sein, die zusätzlich zu einer Extruderschneckenvorrichtung des ersten Abschnitts des zweiten Extruders vorgesehen ist. Der zweite Extruder umfasst den ersten Abschnitt, an den sich unmittelbar der Endabschnitt anschließt. Der Endabschnitt des zweiten Extruders kann daher auch als zweiter Abschnitt des zweiten Extruders betrachtet werden, wobei die Kunststoffschmelze nacheinander zuerst dem ersten Abschnitt und dann dem zweiten Abschnitt zugeführt wird.

Wie im Weiteren näher dargestellt ist, kann der Temperaturunterschied mittels Mischen von Kunststoffschmelzeanteilen unterschiedlicher Querschnitts- oder Radialposition verringert werden bzw. durch (zusätzliches) Temperieren der Kunststoffschmelze, insbesondere durch unterschiedliches Temperieren von unterschiedlichen Kunststoffschmelzeanteilen, die sich an unterschiedlichen Querschnitts- oder Radialpositionen befinden. Diese beiden Varianten zur Verringerung der Temperaturunterschiede werden im Folgenden näher betrachtet.

Gemäß einer Ausführungsform des Verfahrens werden die Temperaturunterschiede zwischen unterschiedlichen Radialpositionen im Querschnitt der Kunststoffschmelze verringert durch Mischen von Anteilen der Kunststoffschmelze, insbesondere von Anteilen, die an unterschiedlichen Positionen des Querschnitts der Kunststoffschmelze liegen, und vorzugsweise durch Mischen von Anteilen, die an unterschiedlichen Radialpositionen des Querschnitts vorliegen. Bevorzugt wird ein erstes Mischen bereits durchgeführt, bevor die Kunststoffschmelze dem zweiten Extruder zugeführt wird. Dadurch kann in dem ersten Extruder oder in einer Komponente, die die Kunststoffschmelze dem zweiten Extruder zuführt (etwa eine Schmelzeleitung oder eine Verbindungsextruder) die Kunststoffschmelze über ihren Querschnitt hinweg gemischt werden. In dem zweiten Extruder kann die so thermisch homogenisierte Schmelze gefördert werden und insbesondere unter Druck gesetzt werden, beim Führen der Kunststoffschmelze durch die Auslassdüse diese einem definierten Druckabfall auszusetzen. Dadurch belastet das Mischen, welches vor dem Zuführen der Kunststoffschmelze zu dem zweiten Extruder durchgeführt wird, nicht den Druckverlauf im zweiten Extruder. Insbesondere kann das Mischen gemäß gewünschten Betriebsparametern durchgeführt werden, ohne durch den notwendigen Druck vor dem Aufschäumen zu unterschreiten. Somit kann das Mischen mit einem gewissen Druckabfall einhergehen, ohne dass dies den Druck beeinträchtigt, mit dem die Kunststoffschmelze durch die Auslassdüse geführt wird, da im zweiten Extruder der Druck in einer bereits thermisch homogenisierten Kunststoffschmelze aufgebaut wird. Das Mischen wird vorzugsweise von ersten Längsabschnitten oder auch (zusätzlich) von statischen Mischern.

Gemäß einer Herangehensweise ergibt sich eine durch mechanische Vermengung eine thermisch homogenisierte Kunststoffschmelze. Eine Ausführungsform des hier beschriebenen Verfahrens sieht daher vor, dass ein erstes Mischen von dem ersten Extruder durchgeführt wird. Dieser kann als Mischextruder ausgebildet sein, insbesondere als kontinuierlicher Mischer. Die Kunststoffschmelze wird somit in dem ersten Extruder gefördert (und insbesondere auch gemischt), der zusätzlich als ein Mischextruder ausgebildet ist. Davon abgesehen kann vorgesehen sein, dass in dem ersten Extruder die Kunststoffschmelze erwärmt wird, um die Kunststoffschmelze zu erzeugen, insbesondere durch Erwärmen des Mantels des ersten Extruders. An dieser Stelle sei bemerkt, dass in dem zweiten Extruder (abgesehen von weiteren Funktionen) die Kunststoffschmelze gekühlt werden kann, als Extruderschneckenvorrichtung des zweiten Extruders, oder auch durch Kühlen des Mantels des zweiten Extruders. Zur Verringerung der Temperaturdifferenz mittels Temperieren sei auf die weiter unten stehende Abschnitte verwiesen.

Als weitere Möglichkeit kann die Kunststoffschmelze von dem ersten Extruder zu dem zweiten Extruder über eine Schmelzeleitung gefördert werden. Beim Zufluss zu der Schmelzeleitung, beim Fördern durch die Schmelzeleitung hindurch und/oder beim Austritt aus der Schmelzeleitung wird der Kunststoffschmelzestrom, welcher von der geförderten Kunststoffschmelze gebildet wird, verändert, wobei insbesondere der Querschnitt und/oder die Richtung des Kunststoffschmelzestroms verändert werden. Durch die Änderung der Richtung und/oder des Querschnitts entlang des Kunststoffschmelzestroms (d.h. entlang des Förderwegs der Kunststoffschmelze) führt zur gewünschten Vermischung von Anteilen der Kunststoffschmelze, die an unterschiedlichen Positionen / Radien des Querschnitts vorliegen.

Durch die Erfindung werden Entmischungsvorgänge vermieden, die ohne die hier beschriebenen Mischvorgänge auftreten, d.h. bei einer Förderung nur durch ein Rohr. Es werden insbesondere thermische Inhomogenitäten vermieden, wobei ohne erfindungsgemäße Homogenisierungsprozesse und bei einer Förderung durch ein Rohr die Strömungsgeschwindigkeit der Kunststoffschmelze in der Mitte des Rohres ca. 10-fach schneller ist als die an der Wand, wodurch sich die inhomogene Temperaturverteilung ergibt. Würde versucht, den Rohrdurchmesser zu verkleinern um die Strömungsdifferenz zu verringern, so würden Reibeffekte auftreten, welche zu einer lokalen Erwärmung der Kunststoffschmelze und damit zu einem gegenteiligen Effekt (d.h. einer stärkeren Inhomogenisierung der Temperaturverteilung über den Querschnitt) führt. Indem gemäß einer Ausführungsform vorgesehen ist, dass in der Leitung statische Mischelemente und/oder Kühlelemente eingebracht sind, wird hier bereits Druck zum Durchfördern dieser Elemente benötigt. Bisheriger Stand der Technik war, dass deshalb nur im Durchmesser sehr grosse und/oder kurze Elemente eingesetzt wurden, so dass damit zwar eine Verbesserung der Homogenität, jedoch keine Optimierung selbiger erzielt werden konnte. Der Einsatz von Schmelzepumpen, um mehr Druck zur Verfügung zu stellen, hat zwar bezüglich der Möglichkeit, nun ebenfalls mehr Mischelemente verwenden zu können, Vorteile, jedoch den Nachteil, dass in Schmelzepumpen thermische Temperaturspitzen generiert werden, die der Homogenisierung wieder entgegenwirken und sogar zu thermischer Schädigung der Kunststoffmaterialien führen können. Die Erfindung vermeidet derartige Schädigungen und ermöglicht dennoch eine homogene Temperaturverteilung über den Querschnitt der Kunststoffschmelze, insbesondere unmittelbar vor der Auslassdüse.

Ferner kann die Kunststoffschmelze von dem ersten Extruder zu dem zweiten Extruder über einen Verbindungsextruder gefördert werden. Beim Fördern durch den Verbindungsextruder wird die Kunststoffschmelze stark durchmischt, wobei insbesondere Anteile der Kunststoffschmelze an unterschiedlichen Positionen des Querschnitts der Kunststoffschmelze miteinander vermischt werden. Der Verbindungsextruder ist vorzugsweise mit mehreren Schneckenspindeln ausgestattet. Diese sind koaxial zur Längsachse des Verbindungsextruders ausgerichtet und umfänglich verteilt. Die Schneckenspindeln fördern und mischen die Kunststoffschmelze durch Rotation der Schneckenspindeln und ihre eigene Längsachse und vorzugsweise auch durch Rotation der Längsachsen der Schneckenspindeln um eine gemeinsame Achse. Die gemeinsame Achse entspricht der Längsachse des Verbindungsextruders. Diese Längsachse des Verbindungsextruders liegt in der Mitte der Schneckenspindel. Die Schneckenspindeln rotieren innerhalb einer Extruderschneckenvorrichtung, in der diese drehbar gelagert sind. Die Achsen der Schneckenspindeln drehen sich gemeinsam um die Achse der Extruderschneckenvorrichtung. Die Extruderschneckenvorrichtung dreht sich selbst um eine Achse, die der Längsachse des Verbindungsextruders bzw. der gemeinsamen Achse entspricht. Durch die Rotation der Extruderschneckenvorrichtung rotieren die Schneckenspindeln um die Längsachse des Verbindungsextruders, da diese (zumindest teilweise) in der Extruderschneckenvorrichtung gelagert sind. Die Schneckenspindeln drehen sich zumindest teilweise versenkt innerhalb der Extruderschneckenvorrichtung. Ein Abschnitt der Schneckenspindeln ragt aus der Umfangsfläche der Extruderschneckenvorrichtung hervor und fördert dadurch die Kunststoffschmelze. Die Schneckenspindeln rotieren innerhalb von jeweiligen Hüllkurven, die sich vorzugsweise nicht überlappen. Die Schneckenspindeln sind untereinander umfänglich beabstandet. Die Extruderschneckenvorrichtung weist Abschnitte an der Umfangsfläche auf, die zwischen den Schneckenspindeln liegt. Diese Abschnitte weisen Schraubenstrukturen auf. Die umfänglichen Abschnitte der Extruderschneckenvorrichtung, welche zwischen den Schneckenspindeln liegen, tragen zum Fördern, zum Druckaufbau, und/oder Mischen der Kunststoffschmelze bei.

Die Schneckenspindeln können über einen gemeinsamen Antrieb angetrieben werden. Dieser Antrieb oder ein weiterer Antrieb kann ferner verwendet werden, um die Extruderschneckenvorrichtung anzutreiben, entlang dessen Umfang die Schneckenspindeln verteilt sind. Die Extruderschneckenvorrichtung kann gegenüber den Schneckenspindeln auch individuell angetrieben werden. Die Extruderschneckenvorrichtung kann zumindest einen Längsabschnitt aufweisen, in dem keine Schneckenspindeln vorgesehen sind. Entlang des Umfangs dieses Längsabschnitts können Strukturen, insbesondere Schneckenstrukturen, vorgesehen sein, die zusammen mit der Extruderschneckenvorrichtung rotierend angetrieben werden, und die in direktem Kontakt mit der Kunststoffschmelze sind. Dieser Längsabschnitt kann insbesondere ein Längsabschnitt des im Folgenden genannten Führungskörpers sein. Der Längsabschnitt kann an einem Ende (entlang der Längsachse der Extruderschneckenvorrichtung betrachtet) der Extruderschneckenvorrichtung bzw. des Führungskörpers angeordnet sein. Der mindestens eine Längsabschnitt, der keine Schneckenspindeln aufweist, kann ein erster Längsabschnitt oder ein zweiter Längsabschnitt sein. Ebenso sind können die Schneckenspindeln einen Längsabschnitt darstellen, der einem ersten oder einem zweiten Längsabschnitt entspricht. Die Schneckenspindeln und die Längsabschnitte der Extruderschneckenvorrichtung sind vorzugsweise unterschiedliche Längsabschnitte im Sinne der Eigenschaften der ersten und zweiten Längsabschnitte. Ein Längsabschnitt der Extruderschneckenvorrichtung ohne Schneckenspindeln wird vorzugsweise von einem Führungskörper gebildet, wie er im hier beschrieben ist.

Die hier beschriebene Extruderschneckenvorrichtung kann einen Führungskörper umfassen, der Ausnehmungen aufweist, in denen die Schneckenspindeln teilweise eingelassen sind, wie es in der internationalen Anmeldung PCT/EP02/11391, veröffentlicht als WO03/033240 A1, oder in dem daraus erteilten Patent EP 1 434 680 B1, beschrieben ist. Insbesondere kann als Verbindungsextruder ein Extruder verwendet werden, wie er in der WO03/033240 beschrieben ist. Hierbei kann der Verbindungsextruder ausgeführt sein gemäß den Ausführungen in der WO03/033240 zu der Beschaffenheit und Anordnung der Hüllkurven, zu Form und Anordnung der Schneckenspindeln, zu der fehlenden Verzahnung unter den Schneckenspindeln untereinander, zu den Steigungen der Schnecken (der Schneckenspindeln), zu dem Antrieb der Extruderschnecke und/oder der Schneckenspindeln, zu der mechanischen und/oder antriebsbezogenen Verbindung zwischen der Extruderschnecke und den Schneckenspindeln, zu der Anordnung und Aufbau des Führungskörpers bzw. des Wellenabschnitts, zu den Zapfen und/oder Zahnkränzen bzw. gemäß einzelnen Merkmalen der Figurenbeschreibung bzw. den Figuren der WO03/033240.

Ferner sei bemerkt, dass auch der erste Extruder und/oder der zweite Extruder ausgebildet sein kann wie der die beschriebene Verbindungsextruder. Zudem kann der Verbindungsextruder auch als Mischextruder ausgelegt sein, als Einschraubenextruder oder als Doppelschraubenextruder oder auch als Mehrfachschraubenextruder mit mehr als zwei Extruderschrauben. Bei Doppelschraubenextruder oder auch bei Mehrfachschraubenextruder werden nebeneinander (überlappend oder nicht überlappend) angeordnete Extruderschrauben verwendet, die nicht ineinander integriert oder in eine gemeinsame Extruderschraubenvorrichtung integriert sind, wie es im Gegensatz hierzu bei der hier beschriebenen Extruderschraubenvorrichtung der Fall ist, die mehrere Schneckenspindeln aufweist.

Wie bereits erwähnt, kann die Temperaturdifferenz innerhalb der Kunststoffschmelze ferner (zusätzlich) verringert werden durch Temperieren der Kunststoffschmelze. Diese Vorgehensweise kann anstelle oder in Kombination mit den hier beschriebenen Mischprozessen verwendet werden. Gemäß einer Ausführungsform umfasst das Verringern der Temperaturunterschiede zwischen unterschiedlichen Radialpositionen im Querschnitt der Kunststoffschmelze ein Schritt des Temperierens der Kunststoffschmelze. Die Kunststoffschmelze kann temperiert werden durch Kühlen der Kunststoffschmelze innerhalb des zweiten Extruders. Es werden Anteile der Kunststoffschmelze, die an unterschiedlichen Positionen des Querschnitts der Kunststoffschmelze liegen (etwa am Außenrand und weiter innerhalb), unterschiedlich temperiert, wobei auch nur Abschnitte der Kunststoffschmelze an bestimmten Positionen des Querschnitts temperiert werden können (etwa nur Abschnitte am Außenrand oder nur Abschnitte an der Innenseite des Querschnitts, d.h. an der Extruderschneckenvorrichtung). Als Temperieren wird das Zuführen oder Abführen von Wärme bezeichnet.

Im Rahmen des Temperierens kann Wärme zwischen der Kunststoffschmelze und dem Mantels des ersten Extruders ausgetauscht werden. Alternativ oder in Kombination hierzu kann Wärme zwischen der Kunststoffschmelze und einem Mantel des zweiten Extruders ausgetauscht werden. Zudem kann Wärme zwischen der Kunststoffschmelze und einem Mantel des Verbindungsextruders ausgetauscht werden. Innerhalb des Mantels des betreffenden Extruders wird die Kunststoffschmelze gefördert, insbesondere mittels der hier beschriebenen Extruderschneckenvorrichtung. Hierbei wird insbesondere Wärme zwischen Anteilen der Kunststoffschmelze und dem betreffenden Mantel ausgetauscht, die in der Nähe des Mantels liegen oder direkt an diesen angrenzen. Schließlich kann im Rahmen des Temperierens Wärme zwischen der Schmelzeleitung oder in der Schmelzeleitung befindliche, temperierte Misch- oder Statikkühlelemente und der Kunststoffschmelze ausgetauscht werden.

Alternativ oder in Kombination mit einem Wärmeaustausch der Kunststoffschmelze gegenüber dem Mantel kann im Rahmen des Temperierens Wärme zwischen der Kunststoffschmelze und einer Extruderschneckenvorrichtung ausgetauscht werden. Es kann daher im Rahmen des Temperierens vorgesehen sein, dass Wärme zwischen der Kunststoffschmelze und einer Extruderschneckenvorrichtung ausgetauscht wird, insbesondere zwischen der Extruderschneckenvorrichtung und Anteilen der Kunststoffschmelze, die nahe an der Extruderschneckenvorrichtung liegen oder die direkt an diese angrenzen. Hierbei wird Wärme gegenüber einer Extruderschneckenvorrichtung ausgetauscht, die die Kunststoffschmelze im ersten Extruder erzeugt und/oder fördert, die in dem zweiten Extruder die Kunststoffschmelze fördert, und/oder die in dem Verbindungsextruder die Kunststoffschmelze fördert, insbesondere von dem ersten zum zweiten Extruder.

Ferner kann Wärme zwischen dem Mantel und/oder der Extruderschneckenvorrichtung einerseits und einer Wärmequelle oder einer Wärmesenke andererseits transportiert werden, etwa über einen Wärmemediumkreislauf, oder es kann Wärme in oder an dem Mantel oder der Extruderschneckenvorrichtung erzeugt werden oder an diesen übertragen werden, insbesondere mittels einer (elektrischen) Heizeinrichtung. Ferner kann eine Kühleinrichtung vorgesehen sein, die als Wärmesenke dient, und mit der die Kunststoffschmelze vom Mantel aus oder von der Extruderschneckenvorrichtung aus gekühlt wird.

Wie bereits bemerkt kann das Temperieren, insbesondere durch Austauschen von Wärme und das Mischen kombiniert werden, um Temperaturunterschiede zwischen unterschiedlichen Positionen im Querschnitt der Kunststoffschmelze zu verringern. Zur Unterstützung des Austauschens von Wärme kann ein Wärmemedium durch Kanäle im Mantel oder in der Extruderschneckenvorrichtung geführt werden.

Gemäß eines weiteren Aspekts der hier beschriebenen Herangehensweise wird eine Extrusionsvorrichtung dargestellt, die zur Herstellung eines Schaumkörpers eingerichtet ist. Diese Extrusionsvorrichtung umfasst mehrere Komponenten und kann daher als Extrusionsanlage betrachtet werden. Die Extrusionsvorrichtung umfasst einen ersten Extruder, insbesondere den hier bereits beschriebenen ersten Extruder, und einen zweiten Extruder, insbesondere den hier bereits beschriebenen zweiten Extruder. Der zweiten Extruder ist dem ersten Extruder nachgeschaltet.

Der erste Extruder ist mit einem Einführungsbereich ausgestattet. Dieser Einführungsbereich weist einen Einführungskanal (etwa im Sinne der hier beschriebenen Zuführung) eingerichtet zum Zuführen von Kunststoffpartikeln auf. Der Einführungskanal ist insbesondere eingerichtet zum Zuführen des hier beschriebenen Kunststoffs in Form von Granulat oder Pulver. Der erste Extruder kann ferner eine Zuführung eingerichtet zur Eingabe von Zusätzen oder eines Treibmittels aufweisen.

Der zweite Extruder ist mit einem Auslassbereich ausgestattet. Dieser weist eine Auslassdüse auf, etwa die hier beschriebene Auslassdüse. Die Auslassdüse ist an dem Ende des zweiten Extruders angeordnet, das dem ersten Extruder entgegengesetzt ist.

Die Extrusionsvorrichtung weist mindestens eine Extruderschneckenvorrichtung, die zum Fördern einer Kunststoffschmelze, welche aus den zugeführten Kunststoffpartikeln in dem Einführungsbereich erzeugt wird, eingerichtet ist.

Der zweite Extruder ist mit mindestens einer Extruderschneckenvorrichtung ausgestattet, die erste Längsabschnitte aufweist, welche zum Fördern und Mischen der Kunststoffschmelze eingerichtet sind. Die Extruderschneckenvorrichtung weist ferner zweite Längsabschnitte auf, die zum Fördern und Aufbauen von Druck in der Kunststoffschmelze eingerichtet sind. Die ersten und zweiten Längsabschnitte wechseln sich ab (in Längsrichtung des zweiten Extruders).

Die Extruderschneckenvorrichtung des zweiten Extruders, eine Extruderschneckenvorrichtung des ersten Extruders oder eine Extruderschneckenvorrichtung eines die Auslassdüse aufweisenden Endabschnitts des zweiten Extruders kann mehrere Schneckenspindeln umfassen. Diese sind koaxial zur Längsachse der Extruderschneckenvorrichtung um diese Längsachse herum verteilt.

Weiterhin kann vorgesehen sein, dass der erste Extruder mit dem zweiten Extruder über eine Schmelzeleitung verbunden ist. In der Schmelzeleitung sind Mischelemente vorgesehen, die zum Vermischen von Anteilen der Kunststoffschmelze, die an unterschiedlichen Radialpositionen im Querschnitt der Kunststoffschmelze vorliegen, eingerichtet sind. Dies sind insbesondere feststehende Flügel, Leitbleche oder ähnliches. Es kann ferner vorgesehen sein, dass die Schmelzeleitung eine Temperierungsvorrichtung aufweist, die Wärme aus in der Schmelzeleitung befindlichen Kunststoffschmelze aufnimmt oder dieser zuführt.

Die Extrusionsvorrichtung weist bevorzugt mindestens eine Schmelzetemperatur-Homogenisierungeinrichtung auf. Insbesondere die Mischelemente bzw. die ersten Längsabschnitte oder auch die Temperierungsvorrichtung kann als Schmelzetemperatur-Homogenisierungeinrichtung betrachtet werden. Die Schmelzetemperatur-Homogenisierungeinrichtung hat insbesondere den Effekt, dass die Temperaturverteilung der Kunststoffschmelze Radialrichtung vergleichmäßigt wird (und somit in einer Richtung im Wesentlichen senkrecht zur Längsachse der Extruderschneckenvorrichtung wirkt). Die Schmelzetemperatur-Homogenisierungeinrichtung nutzt insbesondere einzeln, und bevorzugt kombiniert mehrere oder alle Arten der Vermischung, das distributive, dispergive und umlagernde Mischen. Die mindestens eine Schmelzetemperatur-Homogenisierungeinrichtung ist daher eingerichtet, Temperaturunterschiede zwischen Anteilen der Kunststoffschmelze, die näher an der Längsachse der Extruderschneckenvorrichtung (bzw. des betreffenden Extruders) liegen, und Anteilen der Kunststoffschmelze, die weiter entfernt von der Längsachse liegen, auszugleichen. Die Schmelzetemperatur-Homogenisierungeinrichtung ist insbesondere in der Lage, den hier beschriebenen Schritt des Reduzierens von Temperaturunterschieden auszuführen. Hierzu kann die Schmelzetemperatur-Homogenisierungeinrichtung mit den Eigenschaften oder Komponenten ausgestattet sein, die hier zur Ausführung des Schritts des Reduzierens beschrieben sind. Weitere Ausgestaltungsmöglichkeiten sind im Weiteren beschrieben.

Die Schmelzetemperatur-Homogenisierungeinrichtung kann als Mischer ausgestaltet sein, um Anteile der Kunststoffschmelze, die unterschiedliche Temperaturen aufweisen, zu vermischen. Die unterschiedlichen Temperaturen sind insbesondere mit unterschiedlichen Positionen im Querschnitt der Kunststoffschmelze verknüpft, d.h. mit unterschiedlichen Radialpositionen (entsprechend unterschiedlichen Abständen zur Längsachse). Die Schmelzetemperatur-Homogenisierungeinrichtung ist ausgestaltet, diese Anteile an unterschiedlichen Positionen im Querschnitt bzw. mit unterschiedlichem Abstand zur Längsachse zu mischen. Dadurch und insbesondere durch die Ausgestaltung der Extrudervorrichtung wird der Temperaturunterschied verringert und kann insbesondere auf einen maximalen Temperaturunterschied von nicht mehr als 8 °C, 5 °C, 2 °C oder weniger gebracht werden. Bevor entsprechende Ausgestaltungsformen näher erläutert werden, wird eine weitere Möglichkeit, die mit der vorangehenden Herangehensweise (d.h. mechanische Mischung) kombiniert werden kann, allgemein beschrieben.

Die Schmelzetemperatur-Homogenisierungeinrichtung kann als Temperierungsvorrichtung ausgebildet sein, die Wärme abgeben kann und/oder aufnehmen kann, um die gewünschte Verringerung der maximalen Temperaturdifferenz zu unterstützen. Die Temperierungsvorrichtung ist eingerichtet, näher an der Längsachse der Extruderschneckenvorrichtung (bzw. des betreffenden Extruders) liegende Anteile der Kunststoffschmelze mit einer anderen Wärmeleistung zu versorgen oder diesen zu entnehmen, als weiter entfernt von der Längsachse liegende Anteile. Die Temperierungsvorrichtung kann als eine Kühlvorrichtung und/oder Heizvorrichtung vorgesehen sein. Diese kann beispielsweise an der Extruderschneckenvorrichtung, an einem Mantel eines Extruders und/oder an einer Schmelzeleitung vorgesehen sein oder wärmeübertragend mit dieser Verbunden sein. Die Schmelzetemperatur-Homogenisierungeinrichtung kann insbesondere ausgebildet sein, wie die Komponenten, welche hier im Rahmen des Schritts des Temperierens beschrieben sind. Die Schmelzetemperatur-Homogenisierungeinrichtung kann insbesondere eingerichtet sein, den erwähnten Schritt des Temperierens auszuführen.

Im Weiteren wird eine Ausgestaltungsform der Extrusionsvorrichtung beschrieben, auf dem erwähnten Prinzip des erwähnten Mischers beruht. Hierbei umfasst die Schmelzetemperatur-Homogenisierungeinrichtung die Extruderschneckenvorrichtung, die zur Vermischung von Kunststoffschmelze, welche an unterschiedlichen Radialpositionen im Querschnitt der Homogenisierungszone vorliegt, ausgestaltet ist. Die Extruderschneckenvorrichtung ist in dem ersten Extruder vorgesehen. Alternativ kann die Extruderschneckenvorrichtung in einem Verbindungsextruder vorgesehen sein, der den ersten Extruder mit dem zweiten Extruder verbindet oder kann in dem zweiten Extruder und/oder in einem Endabschnitt des zweiten Extruders vorgesehen sein, der die Auslassdüse aufweist. Als zweiter Extruder, der die Auslassdüse umfasst, werden auch Extruder bezeichnet, denen vorzugsweise unmittelbar ein Mischer als separates Aggregat nachgeschaltet ist, auf den die Auslassdüse folgt. Der Mischer und die Auslassdüse können als Endabschnitt des zweiten Extruders betrachtet werden. Ferner kann sowohl in dem ersten Extruder als auch in dem Verbindungsextruder und in dem Endabschnitt des zweiten Extruders die Extruderschneckenvorrichtung vorgesehen sein.

Eine bevorzugte Ausführungsform sieht vor, dass die Extruderschneckenvorrichtung mehrere Schneckenspindeln umfasst. Diese sind koaxial zur Längsachse der Extruderschneckenvorrichtung verteilt sind, insbesondere umfänglich um die Längsachse der Extruderschneckenvorrichtung herum. Die Extruderschneckenvorrichtung und die Schneckenspindeln liegen konzentrisch zueinander. Die mehreren Schneckenspindeln sind koaxial zu der Längsachse der Extruderschneckenvorrichtung ausgerichtet. Die Schneckenspindeln weisen Hüllkurven auf, die sich nicht überlappen. Die Schneckenspindeln sind in Ausnehmungen der Extruderschneckenvorrichtung eingelassen. Zwischen den Schneckenspindeln in Umfangsrichtung der Extruderschneckenvorrichtung sind Abschnitte vorgesehen, die mit Schneckenstrukturen ausgestaltet sind. Neben den Schneckenspindeln treten diese Abschnitte mit der Kunststoffschmelze in Kontakt und mischen diese. Die hier beschriebene Extruderschneckenvorrichtung kann einen Führungskörper umfassen, der Ausnehmungen aufweist, in dem die Schneckenspindeln teilweise eingelassen sind. Die Extruderschneckenvorrichtung bzw. der erste und/oder zweite Extruder und/oder der Verbindungsextruder können ausgestaltet sein, wie bereits oben beschrieben ist. Insbesondere kann, wie bereits erwähnt, eine Ausgestaltung gemäß der Druckschrift WO03/033240 A1 in betracht gezogen werden. Ferner kann der Mischer einen Abschnitt mit (über einen Längsabschnitt) verengtem Querschnitt aufweisen, etwa wie oben beschrieben, so dass sich durch die Schmelzeführung durch den verengten Querschnitt hindurch bereits eine gewünschte Vermischung ergibt, die zur starken Verringerung der Temperaturdifferenz führt.

Weiterhin kann der Mischer in der Schmelzeleitung ausgebildet sein. Diese ist zwischen dem ersten und dem zweiten Extruder vorgesehen. Insbesondere führt die Schmelzeleitung vom ersten Extruder zum zweiten Extruder. Durch die Führung durch die Schmelzeleitung hindurch, werden Anteile der Kunststoffschmelze, die an unterschiedlichen Querschnittspositionen liegen bzw. unterschiedlich weit von einer Mittenlinie der Querschnitte der Kunststoffschmelze entfernt sind, miteinander vermischt, so dass es zur erwünschten Verringerung der Temperaturunterschiede über den Querschnitt kommt. Der erste Extruder kann mit der Extruderschneckenvorrichtung ausgestattet sein. Gegebenenfalls bestehende Temperaturunterschiede in der Kunststoffschmelze, die von dem ersten Extruder abgegeben wird, werden von der Schmelzeleitung verringert, die mit dem Mischer ausgestattet ist.

Weiterhin kann der Mischer zwischen dem zweiten Extruder und der Auslassdüse ausgebildet sein. Dabei wird eine thermische Mischung nur durch eine ausreichend lange und kleine Mischeranordnung erzielt. Ist die Länge des Mischbereiches zu kurz, so kann zwar "mechanisch" gemischt (im Sinne einer körperlichen Durchmischung von Anteilen der Kunststoffschmelze) werden, also z.B. Additive besser in der Schmelze vermischt werden, jedoch kann eine thermische Homogenisieurung nicht stattfinden.

Handelt es sich z.B. um eine statischen Mischer mit Kreuzelementen, so ist eine Länge der Elemente, die ca. dem vierfachen des Durchmessers des Extruderinnenraums für eine mechanische Vermischung ausreichend, aber erst ab einer Länge, die ca. dem sechsfachen Durchmesser entspricht, erfolgt eine thermische Homogenisierung. Da der Druckabfall über eine derartige Länge signifikant ist, haben bisherige Lösungen bereits bei einer Länge, die dem vierfachen des Durchmessers entspricht, auf eine Vergrößerung des Durchmessers bezogen auf den vorgeschalteten Extruder zurückgegriffen, z.B. bei einem Extruderdurchmesser von 150mm wurde ein Durchmesser von 200mm für den Mischer verwendet. Eine Erhöhung des Druckes durch eine Schmelzepumpe war lange Stand der Technik, wird jedoch aufgrund der festgestellten Temperaturspitzen nicht mehr eingesetzt. Problematisch ist zusätzlich, dass die Schergeschwindigkeit innerhalb des Mischelementes drastisch absinkt. Damit versteift sich die Kunststoffschmelze aufgrund des kunststoffspezifischen Materialverhaltens derart, dass der umgekehrte Effekt eintritt, nämlich trotz eines größeren Mischerdurchmessers nun mehr Druck verbraucht wird als bei einem kleineren Durchmesser. Mit der hier beschriebenen Anordnung sind trotz der einhergehenden Druckverluste Mischerdurchmesser gleich oder kleiner als der Extruderdurchmesser mit einer Länge einsetzbar, die dem ca. sechsfachen Durchmesser des Extruders entspricht oder länger ist.

Wie bereits erwähnt, kann die Schmelzetemperatur-Homogenisierungeinrichtung eine Temperierungsvorrichtung aufweisen. Diese kann in einem Mantelabschnitt oder in der Extruderschneckenvorrichtung zumindest eines der Extruder vorgesehen sein. Die Temperierungsvorrichtung kann, wie bereits erwähnt, in Form einer Heizeinrichtung, einer Kühleinrichtung, einer Kombination hiervon, und/oder als eine Wärmetauscheranordnung vorgesehen sein. Die Extrusionsvorrichtung kann ferner eine Wärmequelle oder Wärmesenke aufweisen, die mit der Wärmetauscheranordnung verbunden ist, insbesondere über einen Wärmemediumkreislauf, der ebenso Bestandteil der Extrusionsvorrichtung sein kann. Die Temperierungsvorrichtung kann an dem ersten Extruder, an dem zweiten Extruder oder an dem Verbindungsextruder oder auch an der Schmelzeleitung vorgesehen sein, um ggf. eine mechanische Mischung, die zur Verringerung der Temperaturunterschiede führt, durch Wärmezufuhr oder -abfuhr zu unterstützen. Die beiden genannten allgemeinen Möglichkeiten zur Ausgestaltung der Homogenisierungseinrichtung können somit kombiniert werden.

Gemäß einem weiteren Aspekt weist die Extrusionsvorrichtung ferner eine Treibmittelquelle auf. Diese kann mit dem Inneren des ersten Extruders, mit einer Schmelzeleitung zwischen dem ersten und dem zweiten Extruder, oder mit dem Inneren des Verbindungsextruders verbunden sein. Wie bereits bemerkt verbindet der Verbindungsextruder den ersten Extruder mit dem zweiten Extruder, entweder direkt, oder über zumindest eine weitere Schmelzeleitung und/oder anderen Kunststoffschmelze führenden Komponenten der Extrusionsvorrichtung. Die Treibmittelquelle kann über eine Zuführung zumindest einer der genannten Komponenten verbunden sein. Ferner kann die Extrusionsvorrichtung einen Behälter mit zumindest einem Zusatz wie er hier beschrieben ist, aufweisen, und/oder einen Behälter mit Kunststoffgranulat, Kunststoff, oder Edukten, aus denen Kunststoff in dem ersten Extruder entsteht.

Die Extrusionsvorrichtung umfasst einen Antrieb für den ersten Extruder und einen Antrieb für den zweiten Extruder, die nicht miteinander direkt bewegungsübertragend verbunden sind, sondern individuell betrieben werden können. Dadurch kann der erste Extruder so gesteuert werden, dass sich eine gewünschte Kunststoffschmelze ergibt mit geringer maximaler Temperaturdifferenz über den Querschnitt gesehen, und der zweite Extruder kann angesteuert werden, einen gewünschten Druck an der Auslassdüse zu erzeugen. Insbesondere wird der zweite Extruder angesteuert bzw. mit einer Temperierungsvorrichtung ausgestattet, so dass im zweiten Extruder keine wesentlichen Temperaturunterschiede hinzukommen. Der zweite Extruder ist dabei derart gestaltet, dass der Druck vor dem Extruder nur über die Drehzahl des Extruders, nicht jedoch durch den Druck an der Auslassdüse bestimmt wird, so dass damit die Möglichkeit gegeben ist, Druckverluste durch die Homogenisierungsvorrichtungen bzw. Mischer auszugleichen. Umfasst die Extruderschneckenvorrichtung mehrere Schneckenspindeln, so kann für den Antrieb der Schneckenspindeln ein Antrieb vorgesehen sein, der unabhängig von dem Antrieb der Extruderschneckenvorrichtung zu dessen Rotation um dessen Längsachse ist. Die Extrusionsvorrichtung umfasst eine Steuervorrichtung, die zur Ausführung des Verfahrens ausgestattet ist, indem diese Betriebsgrößen des ersten Extruders, des zweiten Extruders und gegebenenfalls des Verbindungsextruders verfahrensgemäß einstellt. Insbesondere stellt die Steuervorrichtung die Drehzahl (oder Antriebsleistung) des ersten Extruders und/oder des zweiten Extruders ein, gegebenenfalls auch die Drehzahl (oder Antriebsleistung) des Verbindungsextruders und/oder der Schneckenspindeln. Ferner kann die Steuervorrichtung ausgestaltet sein, um die genannte Temperiervorrichtung wie erwähnt verfahrensgemäß anzusteuern, etwa um eine gewünschte Kälteoder Wärmeleistung zu erzeugen, die an die Kunststoffschmelze angegeben wird. Die Steuervorrichtung kann einen Eingang aufweisen, an dem Temperatursignale empfangen werden, die zumindest eine Temperatur der Kunststoffschmelze und/oder eines Mantels eines der Extruder wiedergibt, vorzugsweise mindestens zwei Temperaturen, die charakteristisch für die Temperaturen von Anteilen der Kunststoffschmelze an unterschiedlichen Querschnittspositionen der Kunststoffschmelze sind. Die Steuervorrichtung kann eine Reglereinheit aufweisen, die mit dem Eingang verbunden ist, um verfahrensgemäß die Temperaturunterschiede zu minimieren (wobei dies das Regelungsziel der Reglereinheit ist). Die Stellgröße der Reglereinheit sind insbesondere die Größen, die die Steuervorrichtung einstellt, oder damit verknüpfte Größen.

### Kurzbeschreibung der Figuren

Die Figur 1 zeigt eine symbolische Darstellung eines Aufbauschemas einer erfindungsgemäßen Vorrichtung zur Erläuterung des erfindungsgemäßen Verfahrens.
Die Figur 2 zeigt eine symbolische Darstellung eines Aufbauschemas einer Ausführungsform der erfindungsgemäßen Vorrichtung zur Erläuterung des erfindungsgemäßen Verfahrens.
Die Figur 3 zeigt einen Querschnitt durch einen der Extruder.
Die Figur 4 zeigt eine symbolische Darstellung eines Aufbauschemas einer weiteren Ausführungsform der erfindungsgemäßen Vorrichtung zur Erläuterung des erfindungsgemäßen Verfahrens.

### Detaillierte Beschreibung der Figuren

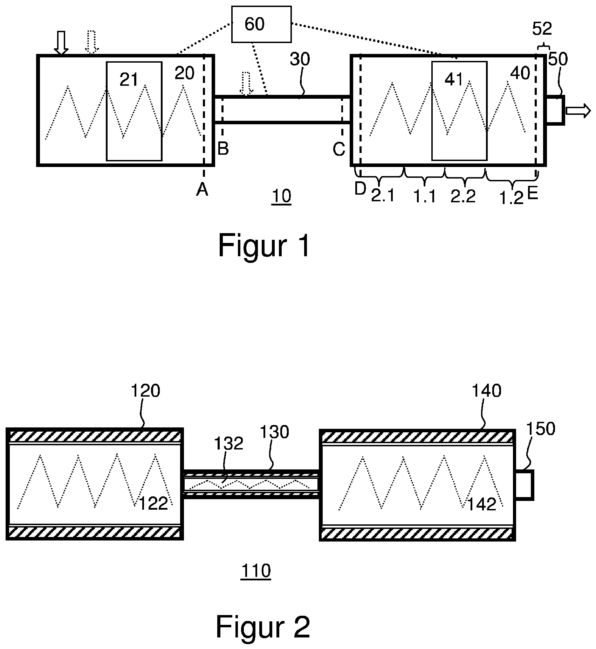

Die Figur 1 zeigt eine symbolische Darstellung eines Aufbauschemas einer erfindungsgemäßen Vorrichtung. Anhand der Figur 1 kann ein erfindungsgemäß ausgestaltetes Verfahren erläutert werden. Die in Figur 1 dargestellte Extrusionsvorrichtung 10 umfasst einen ersten Extruder 20, eine Verbindung 30, die Kunststoffschmelze des ersten Extruders 20 zu einem zweiten Extruder 40 führt, sowie eine Auslassdüse 50 am Ende des zweiten Extruders 40. Die Auslassdüse ist über eine nur symbolisch dargestellte Verbindung 52 an dem restlichen Extruder angebunden, welche insbesondere einen Mischer umfassen kann. Die Verbindung 52 und die Auslassdüse 50 können als Endabschnitt des zweiten Extruders betrachtet werden. In spezifischen Ausführungsformen weist die Verbindung eine weitere Extruderschneckenvorrichtung auf, die wie hier beschrieben ausgestaltet sein kann, und die gegenüber einer Extruderschneckenvorrichtung des restlichen (d.h. dem Endabschnitt vorgelagerten) zweiten Extruders getrennt angetrieben und/oder angesteuert werden kann. In diesem Fall ist der Mischer als ein kontinuierlicher Mischer und insbesondere mit eigener Extruderschneckenvorrichtung ausgestaltet, die angetrieben ist.

Der erste und der zweite Extruder 20, 40 haben jeweils Extruderschraubenvorrichtungen, die als Zick-Zack-Punktlinie symbolisch wiedergegeben sind. Die Extrusionsvorrichtung 10, welche mehrere Extruder umfasst und als eine Extruderanlage betrachtet werden kann, ist ferner mit einer Steuervorrichtung 60 ausgestattet, die insbesondere ansteuernd mit dem ersten und dem zweiten Extruder 20, 40 verbunden ist. Aus Figur 1 ist ersichtlich, dass hierbei individuelle Steuerverbindungen (als Verbindungen in Form von Punktlinien dargestellt) vorgesehen sind. Dies stellt dar, dass die Steuervorrichtung 60 den ersten Extruder 20 und den zweiten Extruder 40 getrennt voneinander ansteuern kann. Der von der Auslassdüse weg führende Pfeil zeigt die Förderrichtung der Kunststoffschmelze, die nach oder während dem Durchtritt durch die Auslassdüse 50 zu einem Schaumkörper expandiert. Die nach unten weisenden, senkrechten Pfeile stellen Zuführungen dar. Der mit durchgezogener Linie dargestellte Pfeil stellt eine Kunststoffgranulatzufuhr dar. Die mit Punktlinie dargestellten Pfeile stellen Zuführungen von Treibmittel und/oder mindestens eines Zusatzes dar. Der auf den ersten Extruder 20 gerichtete, mit Punktlinie dargestellte Pfeil kann eine Zuführung eines Zusatzes sein. Der auf die Verbindung 30 gerichtete, mit Punktlinie dargestellte Pfeil kann eine Zuführung von Treibmittel sein. Die mit Punktlinie dargestellten Pfeile geben jeweils eine optionale Zufuhr wieder. Die Zuführung 30 ist beispielsweise als Verbindungsextruder oder als Schmelzeleitung realisiert, oder kann auch als ein direkter Übergang zwischen dem ersten und dem zweiten Extruder 20, 40 realisiert sein.

Der zweite Extruder weist erste Längsabschnitte 1.1 und 1.2 auf, sowie zweite Längsabschnitte 2.1 und 2.2. Diese Längsabschnitte 1.1 - 2.2 sind unmittelbar aneinander gereiht. Ferner erstrecken sich die Längsabschnitte 1.1 - 2.2 über die gesamte Länge des zweiten Extruders und erstrecken sich insbesondere bis zur Auslassdüse 50. Die ersten Längsabschnitte 1.1 und 1.2 wechseln sich jeweils mit den zweiten Längsabschnitten ab (in Längsrichtung der dargestellten Vorrichtung). Die ersten Längsabschnitte 1.1 und 1.2 sind ausgelegt, die Kunststoffschmelze zu fördern und zu mischen. Die zweiten Längsabschnitte 2.1 und 2.2 sind ausgelegt, die Kunststoffschmelze zu fördern und dadurch den Druck der Kunststoffschmelze zu erhöhen. Jedoch können auch die ersten Längsabschnitte 1.1 und 1.2 ausgelegt sein, den Druck zu erhöhen (wenn auch insbesondere um einen geringeren Druck als die zweiten Längsabschnitte). Unmittelbar vor der Auslassdüse 50 erstreckt sich (in Förderrichtung) der zweite und somit letzte erste Längsabschnitt, der u.a. zum Mischen ausgestaltet ist. Dadurch wird der Auslassdüse 50 durchmischte und somit thermisch homogene Kunststoffschmelze zugeführt. Der zweite Längsabschnitt 2.2 erzeugt den notwendigen Druck in der Kunststoffschmelze, um diese den ersten Längsabschnitt 1.2 zuzuführen, wobei der erzeugte Druck ausreichend hoch ist, dass trotz eines Druckabfall über den ersten Längsabschnitt 1.2 die Kunststoffschmelze mit ausreichendem Druck durch die Auslassdüse 50 gepresst wird. Da sich auch vor diesem ersten Längsabschnitt 1.2 ein erster und ein zweiter Längsabschnitt abwechseln, ist sowohl der Druck als auch der Durchmischungsgrad ausreichend für einen gewünschten Mindestdurchsatz durch die Auslassdüse 50 und ausreichend für eine homogene Temperaturverteilung in der Schmelze am Austritt durch die Auslassdüse 50. In dem zweiten Extruder sind mindestens ein, vorzugsweise zwei oder mehr als zwei erste Längsabschnitte vorgesehen. In dem zweiten Extruder sind ferner mindestens ein, vorzugsweise zwei oder mehr als zwei erste Längsabschnitte vorgesehen. Es kann im zweiten Extruder beispielsweise nur ein zweiter Längsabschnitt vorgesehen sein, auf den (vorzugsweise unmittelbar) ein erster Längsabschnitt (des zweiten Extruders) folgt und dem ein weiterer erster Längsabschnitt (des zweiten Extruders) vorausgeht, vorzugsweise unmittelbar.

Zur Bezeichnung der Längsabschnitte sei bemerkt, dass "erste" und "zweite" im Kontext der Längsabschnitte nicht die Reihenfolge sondern die Zuordnung zu Eigenschaften definieren: Erste Längsabschnitte haben die Funktion zu Mischen und zweite Längsabschnitte haben die Funktion, den Druck in der Kunststoffschmelze zu erhöhen. Beide Längsabschnittarten haben die Eigenschaft, die Kunststoffschmelze zu fördern, wenn auch bei unterschiedlichem Druckaufbau. Es sei bemerkt, dass auch Verbindungsextruder oder der erste Extruder erste und/oder zweite Längsabschnitte aufweisen können, in beliebiger Anzahl.

In dem ersten Extruder wird eine Kunststoffschmelze erzeugt. Hierzu kann der erste Extruder eine Heizeinrichtung 21 aufweisen. Am Ende des ersten Extruders 20 ergibt sich ein Querschnitt A der Kunststoffschmelze, der eine inhomogene Temperaturverteilung aufweisen kann. Durch Verwendung einer Schmelzeleitung als Verbindung 30 oder auch durch einen direkten Übergang zwischen den Extrudern 20 und 40 (der mit einer starken Verjüngung der Kunststoffschmelzenquerschnittsfläche einhergehen kann oder auch mit einer Richtungsänderung des Kunststoffschmelzestroms) die die inhomogene Temperaturverteilung verringert. Es ergibt sich ein Querschnitt B unmittelbar nach dem ersten Extruder in der Verbindung 30 der Kunststoffschmelze mit verringerter maximaler Temperaturdifferenz. Falls die Verbindung 30 mittels eines Verbindungsextruders ausgeführt wird, der insbesondere die Eigenschaften eines Mischerextruders haben kann, ergibt sich am Querschnitt C, der an dem Ende des Verbindungsextruders liegt, welcher unmittelbar am zweiten Extruder angeschlossen ist, dessen maximale Temperaturdifferenz geringer ist als am Querschnitt C, welcher am entgegengesetzten Ende der Verbindung liegt. Am Querschnitt D im zweiten Extruder 40, der unmittelbar auf die Verbindung 30 folgt, liegt eine geringe maximale Temperaturdifferenz vor, die der von Querschnitt C entspricht oder geringer als diese ist, da ein Übergang von der Verbindung 30 zu dem zweiten Extruder ebenso mit einer Richtungsänderung oder Querschnittsflächenänderung des Kunststoffschmelzestroms einher gehen kann, die zu einer weiteren Vermischung von Anteilen der Kunststoffschmelze führt, die unterschiedliche Temperaturen aufweisen. Am Querschnitt E, der unmittelbar vor der Auslassdüse 50 liegt, besteht ein maximale Temperaturdifferenz, die im Wesentlichen der Temperaturdifferenz im Querschnitt D entspricht, oder darunter. Der zweite Extruder kann eine Temperierungsvorrichtung 41 aufweisen, insbesondere eine Kühlvorrichtung, um die Kunststoffschmelze zu kühlen. Die Vorrichtungen 21 und 41 können allgemein Temperierungsvorrichtungen sein, die zum Kühlen und/oder zum Erwärmen der Kunststoffschmelze eingerichtet sind. Diese Temperierungsvorrichtungen 21 und 41 dienen zum erhöhen, einstellen oder verringern der Kunststoffschmelzetemperatur in dem ersten bzw. zweiten Extruder 20, 40 und sind insbesondere eingerichtet, Anteile der Kunststoffschmelze mit höherer Temperatur als andere Anteile zu kühlen und/oder Anteile der Kunststoffschmelze mit geringerer Temperatur als andere Anteile zu erwärmen, um die Temperaturdifferenz zu verringern. Da insbesondere die Temperatur nicht nur allgemein über den Querschnitt unterschiedlich ist, sondern insbesondere an unterschiedlichen Radialpositionen unterschiedlich ist, können die Temperierungsvorrichtungen 21 und 41 verwendet werden, um Anteile der Kunststoffschmelze am Mantel des Extruders oder an der Extruderschneckenvorrichtung des Extruders stärker zu kühlen oder zu erwärmen, als Anteile an anderen Stellen des Querschnitts. Die Kunststoffschmelze, welche der Auslassdüse 50 zugeführt wird, weist nur eine geringe maximale Temperaturdifferenz auf, so dass der Erstarrungsprozess, der sich mit dem Expansionsprozess überlappen kann, über den gesamten Querschnitt der erstarrenden Kunststoffschmelze im Wesentlichen gleich (schnell) abläuft. Daraus resultiert eine über den Querschnitt des Kunststoffkörpers (=erstarrte Kunststoffschmelze) im Wesentlichen gleiche Zellstruktur, insbesondere hinsichtlich der Zellgröße, der Zellendichte und/oder der Wanddicke zwischen den Zellen. Die Temperierungsvorrichtung 21 des ersten Extruders 20 ist beispielsweise eingerichtet, die Kunststoffschmelze auf eine Temperatur von 150 - 290 °C (abhängig vom verwendeten Kunststoffmaterial) zu erhitzen, wobei die Temperierungsvorrichtung 21 (oder die Steuervorrichtung) mit einem Regler ausgestattet sein kann, um die Kunststoffschmelze auf eine gewünschte Temperatur einzustellen. Der erste und/oder der zweite Extruder 20, 40 oder auch die Verbindung 30 kann mit (mindestens) einen Temperatursensor zur Erfassung der Temperatur der Kunststoffschmelze ausgestattet sein. Dieser ist mit dem Regler bzw. der Steuervorrichtung verbunden, um ein entsprechendes Temperatursignal an den Regler zu liefern.

Die Figur 2 zeigt eine symbolische Darstellung eines Aufbauschemas einer Ausführungsform der erfindungsgemäßen Vorrichtung zur Erläuterung des erfindungsgemäßen Verfahrens. Ein erster Extruder 120 ist mit einer Extruderschraubenvorrichtung 122 ausgestattet. Dem ersten Extruder 120 ist ein Verbindungsextruder 130 nachgeschaltet (in unmittelbarer Weise), der ebenso eine Extruderschraubenvorrichtung 132 aufweist. Auf den Verbindungsextruder 130 folgt (unmittelbar) ein zweiter Extruder 140, der ebenso eine Extruderschraubenvorrichtung 142 aufweist. Die Extruderschraubenvorrichtung 122 und die Extruderschraubenvorrichtung 142 des ersten und des zweiten Extruders 120, 140 können individuell angesteuert werden. Dies gilt ebenso für die Extruderschraubenvorrichtung 132 gegenüber den Extruderschraubenvorrichtungen 122 und 142. Der zweite Extruder 140 weist eine Auslassdüse 150 auf. Durch diese fördert die Extruderschraubenvorrichtungen 142 Kunststoffschmelze mit eine homogenen Temperaturverteilung, da insbesondere der Verbindungsextruder 130 die Kunststoffschmelze über den Querschnitt vermischt.

Der erste Extruder erzeugt eine Kunststoffschmelze, deren Temperaturunterschiede über den Querschnitt - falls vorhanden - von dem Verbindungsextruder verringert wird. Der Verbindungsextruder 130 dient ferner dem Druckaufbau, wodurch der erste Extruder 120 vorallem eine Mischfunktion haben kann, und der daraus folgende Druckverlust von dem Verbindungsextruder 130 und insbesondere von dem zweiten Extruder 140 kompensiert werden kann. Auch der Verbindungsextruder 130 kann vorallem als Mischextruder dienen, wobei der damit verknüpfte Druckverlust ebenso von dem zweiten Extruder 140 kompensiert werden kann. Am Ausgang des ersten Extruders und/oder des Verbindungsextruders kann die Kunststoffschmelze daher unter einem geringerem Druck stehen, als an der Auslassdüse 150 des zweiten Extruders.

Der zweite Extruder kann somit vornehmlich zum Druckaufbau verwendet werden, da dieser bereits über den Querschnitt thermisch homogenisierte Kunststoffschmelze von dem Verbindungsextruder erhält. Zudem kann in dem zweiten Extruder die Kunststoffschmelze gekühlt werden, während der erste Extruder zum Erwärmen (und Erzeugen) der Kunststoffschmelze dient. Vor allem der Verbindungsextruder 130 kann als Mischextruder mit hoher Oberflächenerneuerung ausgestaltet sein, insbesondere mit einer Oberflächenerneuerung, die größer ist als die des zweiten Extruders (der vornehmlich zum Druckaufbau dient). Auch der erste Extruder 120 kann wie der Verbindungsextruder 130 als Mischextruder mit hoher Oberflächenerneuerung ausgestaltet sein, insbesondere mit einer Oberflächenerneuerung, die größer ist (etwa um ein Faktor von mindestens 1.5, 2, 5, bevorzugt 8 oder 10) als die des zweiten Extruders 140. Hierzu kann der als Mischextruder vorgesehene Extruder eine Extruderschraubenvorrichtung 132 und/oder 142 mit mehreren Schneckenspindeln aufweisen, wie hierin beschrieben ist. Zusätzlich oder in Kombination hierzu kann der der als Mischextruder vorgesehene Extruder eine Extruderschraubenvorrichtung 132 und/oder 142 aufweisen, deren Schneckengang unterbrochen ist, insbesondere über mindestens 30%, 50%, 80% oder 90% der Gesamtlänge der Extruderschraubenvorrichtung. Dadurch entsteht zwar weniger Druck (wobei dies der zweite Extruder kompensiert), jedoch führt dies zu einer starken Durchmischung der Kunststoffschmelze in diesem Extruder bzw. in diesen Extrudern. Der zweite Extruder 140 weist vorzugsweise eine Extruderschraubenvorrichtung 142 auf, die deren Schneckengang nicht (oder nur an Übergangsabschnitten) unterbrochen ist.

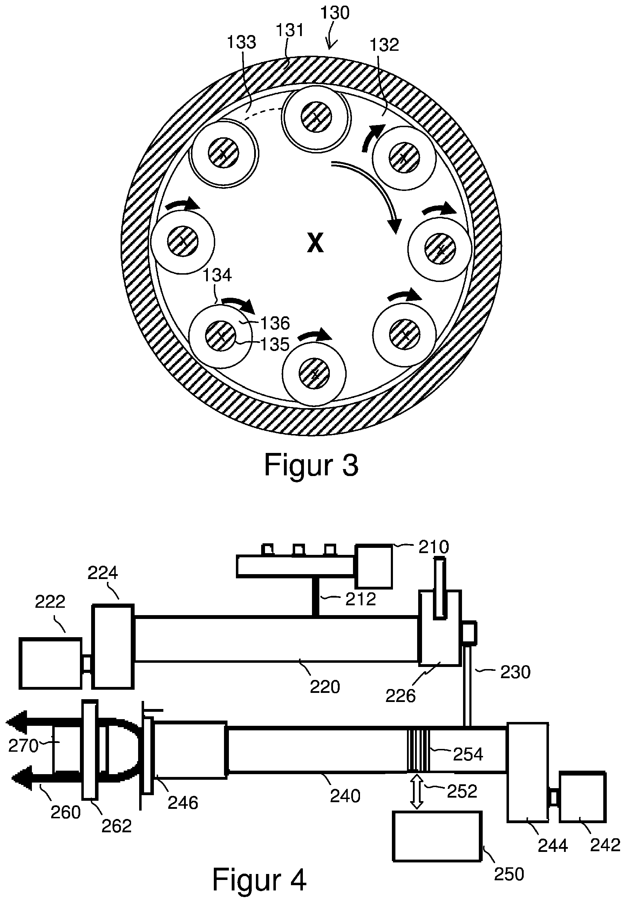

Die Figur 3 zeigt einen beispielhaften Extruder 130 im Querschnitt. Dieser Extruder entspricht in diesem Beispiel dem Verbindungsextruder 130 der Figur 2, kann jedoch auf dem ersten Extruder und/oder ggf auch dem zweiten Extruder entsprechen. Aus diesem Grund wird im Rahmen der Beschreibung von Figur 3 allgemein der dargestellte Gegenstand als Extruder 130 (und nicht als Verbindungsextruder 130) bezeichnet, und steht allgemein für den ersten, den zweiten und/oder den Verbindungsextruder.

Der Extruder 130 der Figur 3 umfasst einen (hohlzylindrischen) Mantel 131 mit kreisförmigem Querschnitt, in dem sich die Extruderschraubenvorrichtung 132 befindet. Diese weist umfänglich verteilte Schneckenspindeln 134 auf. Die Schneckenspindeln 134 (von denen der besseren Übersicht wegen mit einem Bezugszeichen gekennzeichnet ist) sind untereinander im gleichen Winkelabstand zueinander angeordnet. Die Schneckenspindeln 134 umgeben die Längsachse der Extruderschraubenvorrichtung 132 koaxial, wobei die Längsachse der Extruderschraubenvorrichtung 132 im Zentrum der Figur 3 als Kreuz dargestellt ist. Insbesondere die einzelnen Längsachsen der Schneckenspindeln 134 (ebenso mit einem Kreuz gekennzeichnet) sind parallel zu der Längsachse der Extruderschraubenvorrichtung 132. Die Schneckenspindeln und insbesondere deren Längsachsen sind entlang eines Kreises angeordnet, in dessen Mitte sich die Extruderschraubenvorrichtung 132 bzw. deren Längsachse befindet. Die Schneckenspindeln 134 weisen Hüllkurven auf, die sich nicht überlappen. Die Hüllkurven geben den Außenrand des Schneckengewindes 136 der Schneckenspindeln 134 wieder. Die Schneckengewinde 136 setzen auf einem kreiszylindrischen Vollkörper 135 auf.

Die Schneckenspindeln 134 sind in Ausnehmungen der Extruderschneckenvorrichtung 132 eingelassen. Zwischen den Schneckenspindeln in Umfangsrichtung der Extruderschneckenvorrichtung sind Abschnitte 133 vorgesehen, die mit Gewindestrukturen ausgestaltet sind. Diese Abschnitte sind zwischen allen benachbarten Schneckenspindeln vorgesehen. Die gestrichelte Linie gibt den Übergang zu den Gewindegängen der Gewindestrukturen wieder. In Figur 3 ist der besseren Übersicht wegen nur ein Abschnitt 133 mit einem Bezugszeichen gekennzeichnet. Die Extruderschneckenvorrichtung 132 umfasst einen Führungskörper umfassen, der Ausnehmungen aufweist, in dem die Schneckenspindeln eingelassen sind. Die Ausnehmungen erstrecken sich nicht über die gesamte Länge der Extruderschneckenvorrichtung 132, um an den längsseitigen Enden der Schneckenspindeln 134 Lager für die Schneckenspindeln 134 vorzusehen. Der Führungskörper erstreckt sich daher in Längsrichtung über die Extruderschneckenvorrichtung 132 hinaus. Die mit einzelner Linie dargestellten Pfeile geben die Bewegung der Schneckenspindeln 134 um deren jeweilige Längsachse wieder. Die mit Doppellinie dargestellten Pfeile geben die Drehbewegung der Extruderschneckenvorrichtung 132 bzw. dessen Führungskörper um die Längsachse der Extruderschneckenvorrichtung wieder. Die Bewegung der Schneckenspindeln 134 ist vorzugsweise unabhängig von der Bewegung der Extruderschneckenvorrichtung 132. Insbesondere können unabhängig steuerbare Antriebe oder unabhängige Antriebsabschnitte vorgesehen sein, die mit den Schneckenspindeln 134 einerseits und der Extruderschneckenvorrichtung (bzw. mit dem Führungskörper) andererseits verbunden sind und eine individuelle Bewegung bzw. eine individuelle Antriebssteuerung ermöglichen. Die Schneckenspindeln 134 können zum Antrieb miteinander verbunden sein und insbesondere gemeinsam angetrieben werden. Ein derartiger gemeinsamer Antrieb der Schneckenspindeln 134 einerseits und der Antrieb der Extruderschneckenvorrichtung (zur Rotation der Extruderschneckenvorrichtung um ihre Längsachse) andererseits sind unabhängig voneinander. Alternativ kann der gemeinsame Antrieb und der Antrieb der Extruderschneckenvorrichtung zur Rotation der Extruderschneckenvorrichtung um ihre Längsachse miteinander gekoppelt sein.

Die gestrichelten Bereiche der Figur 3 sowie der Bereich innerhalb der gestrichelten Linie ist vorzugsweise ein Vollkörper. Von dem gestrichelten Bereich 135 der Schneckenspindeln 134 sowie von der gestrichelten Linie der Extruderschneckenvorrichtung 132 aus erstrecken sich jeweils Gewindegänge jeweils radial nach außen. Diese sind vorzugsweise im Wesentlichen durchgängig. Alternativ kann der Bereich 133 einen Gewindegang mit einer Steigung von null als nach radial außen gerichtete Struktur ausweisen, d.h. eine umfänglich verlaufende Erhebung.

Wie bereits erwähnt kann für die Extruderschneckenvorrichtung eine Ausgestaltung gemäß der Druckschrift WO03/033240 A1 in Betracht gezogen werden. Die Extruderschneckenvorrichtung kann insbesondere wie der Mehrschneckenextruderteil der WO03/033240 A1 ausgestaltet sein, beispielsweise in Hinblick auf die Ausgestaltung und Anordnung der Schneckenspindeln, der Extruderschneckenvorrichtung. Die Extruderschneckenvorrichtung kann ferner Extruderschnecken aufweisen, wie sie in WO03/033240 A1 wiedergegeben sind, welche sich in Verlängerung der in Figur 3 dargestellten Anordnung angeordnet sind, wie auch in WO03/033240 A1 dargestellt ist.

Die Figur 4 zeigt eine symbolische Darstellung eines Aufbauschemas einer weiteren Ausführungsform der erfindungsgemäßen Vorrichtung zur Erläuterung des erfindungsgemäßen Verfahrens. Die in Figur 4 dargestellte Extrudervorrichtung umfasst ein Zubereitungs- oder Vorhalteelement zur Zuführung von Kunststoffgranulat und/oder Zusätzen oder auch von Treibmittel in einen ersten Extruder 220. Dieser ist mit einem Antrieb 222 ausgestattet, der über eine Kopplung 224 eine Extruderschneckenvorrichtung antreibt. Der Antrieb 222 und die Kopplung 224 des ersten Extruders 220 sind an einem Ende des Extruders 220 vorgesehen. Am entgegengesetzten Ende ist ein Filter 226 und/oder eine Matrix vorgesehen, die zum Mischen der Kunststoffschmelze eingerichtet ist. Dadurch wird eine gewisse Temperaturhomogenisierung über den Querschnitt der Kunststoffschmelze erreicht. Der erste Extruder 220 gibt über den Filter 226 Kunststoffschmelze an eine Schmelzeleitung 230 ab, die den ersten Extruder mit einem zweiten Extruder 240 verbindet. Auch in der Schmelzeleitung bzw. durch den Übergang in die Schmelzeleitung 230 und bei dem Übergang aus dieser heraus wird die Kunststoffschmelze nochmals durchmischt, insbesondere aufgrund einer Querschnittsänderung oder Richtungsänderung der Kunststoffschmelze beim Übergang zwischen Schmelzeleitung und den Extrudern. Auch hierdurch ergibt sich eine Temperaturhomogenisierung über den Querschnitt der Kunststoffschmelze.

Der zweite Extruder 240 weist einen Antrieb 242 auf, der über eine entsprechende Kopplung 244 eine Extruderschneckenvorrichtung in dem zweiten Extruder antreibt. Der Antrieb 242 und der Antrieb 222 sind voneinander getrennt und können unabhängig voneinander angesteuert werden. Durch den Filter 226 und die Schmelzeleitung 230 ergibt sich zwar eine Durchmischung der Kunststoffschmelze, die zur Temperaturhomogenisierung über den Querschnitt der Kunststoffschmelze führt. Allerdings ist dies mit einem Druckverlust verbunden, wobei der zweite Extruder den Druck der Kunststoffschmelze gegenüber dem Druck in der Schmelzeleitung 230 oder in dem ersten Extruder 220 erhöht, insbesondere auf einen Druck, der an der Auslassdüse 246 des zweiten Extruders erwünscht ist. Der zweite Extruder wird über eine Kühlvorrichtung 250 der in Figur 4 dargestellten Extrudervorrichtung gekühlt, wobei Wärme gemäß der wärmeübertragenden Verbindung 254 zwischen Kühlvorrichtung 250 und zweitem Extruder 254 übertragen wird. Die Kühlvorrichtung 250 ist mit dem Mantel des zweiten Extruders verbunden. Die Kühlvorrichtung 250 kühlt die Kunststoffschmelze innerhalb des zweiten Extruders von der Seite des Mantels aus. Der Mantel weist hierzu Kühlkanäle 254 auf, die auch in einer Kühlmanschette ausgestaltet sein können. Die wärmeübertragenden Verbindung 254 ist insbesondere ein Wärmemediumkreislauf.

Der zweite Extruder 240 weist ein Ende auf, an dem die Schmelzeleitung 230 angeschlossen ist und an dem sich insbesondere der Antrieb 242 bzw. die Kupplung 244 befindet. An dem dazu entgegengesetzten Ende ist die Auslassdüse 246 vorgesehen. Diese ist eine Rundschlitzdüse mit einem vorzugsweise kreisförmigen Schlitz, durch den die geschäumte und zumindest zum Teil erstarrte Kunststoffmasse 260 abgegeben wird, siehe Pfeile. Der Auslassdüse 246 nachgeschaltet sind optionale Nachbehandlungskomponenten wie ein Kühlring 262 und ein Aufziehdorn 270, zwischen denen die zumindest teilweise erstarrte Kunststoffmasse 260 gefördert wird. Die so erhaltene zumindest zum Teil erstarrte Kunststoffmasse 260 bildet einen hohlzylinderischen Schaumstoffkörper, der im Weiteren noch längs aufgeschnitten werden kann, um eine flache, geschäumte Kunststofffolie als Schaumkörper zu bilden. Im Nachgang kann diese Folie noch aufgewickelt werden und etwa zur Nachexpansion und ggf. für Thermoformschritte gelagert werden.

Der zweite Extruder ist vorzugsweise mit einer Extruderschneckenvorrichtung ausgestattet, die durchgehende Gewindegänge aufweist, um den Druck für die Auslassdüse 246 aufzubauen. Diese Gewindegänge sind nur über einen Spalt von der Innenseite des Mantels des ersten Extruders beabstandet, so dass Kunststoffschmelze bei der Förderbewegung durch diesen Spalt treten muss und auch dadurch gemischt wird (und insbesondere über den Mantel des zweiten Extruders temperiert werden kann). Vorzugsweise ist der zweite Extruder (und insbesondere dessen Extruderschneckenvorrichtung) lang ausgestaltet, d.h. hat ein Verhältnis von Länge zu Durchmesser von mindestens 4 oder 5 und vorzugsweise mindestens 6, 7 oder mehr.

Ferner sei bemerkt, dass die hier erwähnten Extruderschneckenvorrichtungen aufgebaut sein können wie in Figur 3 dargestellt, insbesondere mit mehreren umfänglich verteilten Schneckenspindeln. Stattdessen kann zumindest eine der hier erwähnten Extruderschneckenvorrichtungen aufgebaut sein wie die Schnecke eines Einschneckenextruders mit einem inneren zylindrischen Schneckenkörper und um diesen helixförmig gewundene Gewindegänge. Falls nicht anders beschrieben kann der verwendete Extruder ein Einschnecken- oder Doppelschneckenextruder sein.

## Patentansprüche

1. Verfahren zur Herstellung eines Schaumkörpers durch Extrusion, umfassend:
- Erzeugen einer Kunststoffschmelze innerhalb eines Mantels (131) eines ersten Extruders (20); und
- Fördern der Kunststoffschmelze zu einer Auslassdüse (50) eines zweiten Extruders (40), der eine Extruderschneckenvorrichtung (142) aufweist, wobei die geförderte Kunststoffschmelze Treibmittel aufweist und expandiert, nachdem diese durch die Auslassdüse (50) geführt wurde, wobei in ersten Längsabschnitten (1.1, 1.2) der Extruderschneckenvorrichtung (142) des zweiten Extruders (40) die Kunststoffschmelze gefördert und/oder gemischt wird und in zweiten Längsabschnitten (2.1, 2.2) der Extruderschneckenvorrichtung (142) des zweiten Extruders (40) die Kunststoffschmelze gefördert wird und Druck in der Kunststoffschmelze aufgebaut wird, wobei die Kunststoffschmelze abwechselnd durch erste und zweite Längsabschnitte (1.1 - 2.2) geführt wird und dadurch vor dem Führen der Kunststoffschmelze durch die Auslassdüse (50) hindurch Temperaturunterschiede zwischen unterschiedlichen Radialpositionen im Querschnitt der Kunststoffschmelze verringert werden und die derart thermisch homogenisierte Kunststoffschmelze durch die Auslassdüse (50) geführt wird, und wobei der Antrieb (222) für den ersten Extruder (20) und der Antrieb (242) für den zweiten Extruder (40) nicht miteinander direkt bewegungsübertragend verbunden sind und individuell betrieben werden wobei die zweiten Längsabschnitte derart Druck aufbauen, dass Druckverluste aufgrund der ersten Abschnitte oder aufgrund anderer Durchmischungsstrukturen ausgeglichen werden und wodurch ferner der Druck vor dem zweiten Extruder (40) nur über die Drehzahl des zweiten Extruders (40), nicht jedoch durch den Druck an der Auslassdüse bestimmt wird, und ferner Anteile der Kunststoffschmelze, die an unterschiedlichen Radialpositionen vorliegen, gemischt werden, bevor die Kunststoffschmelze dem zweiten Extruder (40) zugeführt wird, wobei
- die Anteile vor dem Zuführen zu dem zweiten Extruder (40) in dem ersten Extruder (20) mittels einer Homogenisierungsvorrichtung einer Extruderschneckenvorrichtung des ersten Extruders gemischt werden;
- die Anteile vor dem Zuführen zu dem zweiten Extruder (40) gemischt werden in einer Schmelzeleitung (230), durch die die Kunststoffschmelze von dem ersten Extruder (20) zu dem zweiten Extruder (40) geführt werden, wobei in der Schmelzeleitung Mischelemente vorgesehen sind, die die Anteile in der Schmelzeleitung (230) vermischen und/oder die Schmelzeleitung (230) eine Temperierungsvorrichtung aufweist, die Wärme aus in der Schmelzeleitung (230) befindliche Kunststoffschmelze aufnimmt oder dieser zuführt; und/oder
- die Anteile vor dem Zuführen zu dem zweiten Extruder (40) gemischt werden in einem Verbindungsextruder (130), der die Kunststoffschmelze von dem ersten Extruder (120) zu dem zweiten Extruder (140) fördert, und der insbesondere die Kunststoffschmelze mittels mehrerer Schneckenspindeln (134) fördert, die koaxial zur Längsachse des Verbindungsextruders (130) verteilt sind, und/oder
wobei Anteile der Kunststoffschmelze, die an unterschiedlichen Radialpositionen vorliegen, gemischt werden, bevor die Kunststoffschmelze durch die Auslassdüse (50) des zweiten Extruders (40) tritt, wobei
- die Anteile vor dem Zuführen zu der Auslassdüse (50) in dem zweiten Extruder (40) mittels einer Homogenisierungsvorrichtung einer Extruderschneckenvorrichtung des zweiten Extruders (40) gemischt werden;
- die Anteile vor dem Zuführen zu der Auslassdüse (50) gemischt werden in einer Verbindung (52), durch die die Kunststoffschmelze der Auslassdüse (50) dem zugeführt wird, wobei in der Verbindung (52) Mischelemente vorgesehen sind, die die Anteile Verbindung (52) vermischen und/oder die Verbindung (52) eine Temperierungsvorrichtung aufweist, die Wärme aus in der Verbindung befindliche Kunststoffschmelze aufnimmt oder dieser zuführt, wobei die Verbindung insbesondere als Schmelzeleitung (230) ausgebildet ist; und/oder
- die Anteile vor dem Zuführen der Auslassdüse (50) gemischt werden in der Verbindung (52), die als ein Verbindungsextruder (130) als Teil eines Endabschnitts des zweiten Extruders (40) ausgebildet ist, wobei die Verbindung (52) die Kunststoffschmelze von demjenigen Abschnitt des zweiten Extruder (40), welcher sich vor dem Endabschnitt befindet, der Auslassdüse (50) zuführt, welche wie die Verbindung (52) dem Endabschnitt des zweiten Extruders (40) angehört, wobei innerhalb der Verbindung (52) eine Extruderschneckenvorrichtung (132), insbesondere mit mehreren Schneckenspindeln, die Kunststoffschmelze fördert.

2. Verfahren nach Anspruch 1, wobei die ersten und zweiten Längsabschnitte (1.1, 1.2; 2.1, 2.2), durch die abwechselnd Kunststoffschmelze geführt wird, unmittelbar aneinander grenzen, so dass kein Bereich der Schnecke ohne bis zum Mantel des zweiten Extruders reichenden Schneckengang bzw. Schneckensteg ist.

3. Verfahren nach einem der vorangehenden Ansprüche, wobei in dem ersten und/oder zweiten Extruder (20, 40) die Kunststoffschmelze mittels mehrerer Schneckenspindeln (134) gefördert wird, welche koaxial zur Längsachse des ersten bzw. zweiten Extruders (130) verteilt sind.

4. Verfahren nach Anspruch 1 oder 3, wobei sich die Schneckenspindeln (134) jeweils um ihre eigene Achse drehen, die Hüllkurven der Schneckenspindeln sich nicht überlappen, und sich die Achsen der Schneckenspindeln gemeinsam um die Achse einer Extruderschneckenvorrichtung (132) drehen, in der die Schneckenspindeln (134) zumindest teilweise eingelassen sind.

5. Verfahren nach einem der vorangehenden Ansprüche, wobei ferner die Temperaturunterschiede zwischen unterschiedlichen Radialpositionen im Querschnitt der Kunststoffschmelze verringert werden durch Temperieren der Kunststoffschmelze, insbesondere durch Kühlen der Kunststoffschmelze innerhalb des zweiten Extruders (40).

6. Verfahren nach Anspruch 5, wobei das Temperieren der Kunststoffschmelze zumindest einen der folgenden Schritte umfasst:
- Austauschen von Wärme zwischen der Kunststoffschmelze einerseits und dem Mantel des ersten Extruders (20) und/oder einem Mantel des zweiten Extruders (40) andererseits; und/oder
- Austauschen von Wärme zwischen der Kunststoffschmelze einerseits und einer Extruderschneckenvorrichtung (130), die die Kunststoffschmelze im ersten und/oder zweiten Extruder (20, 40) erzeugt oder fördert, andererseits.

7. Extrusionsvorrichtung (10) zur Herstellung eines Schaumkörpers gemäß einem Verfahren nach einem der vorangehenden Ansprüche, wobei die Extrusionsvorrichtung umfasst:
- einen ersten Extruder (20) mit einem Einführungsbereich, der einen Einführungskanal eingerichtet zum Zuführen von Kunststoffpartikeln aufweist;
- eine zweiten Extruder (40) mit einem Auslassbereich, der eine Auslassdüse (50) aufweist;
wobei die Extrusionsvorrichtung (10) einen Antrieb (222) für den ersten Extruder (220) und einen Antrieb (242) für den zweiten Extruder (240) umfasst, die nicht miteinander direkt bewegungsübertragend verbunden sind und, individuell betrieben werden können,
wobei der zweite Extruder (40) mit mindestens einer Extruderschneckenvorrichtung (130) ausgestattet ist, die erste Längsabschnitte (1.1, 1.2) aufweist, die zum Fördern und/oder Mischen der Kunststoffschmelze eingerichtet sind, und zweite Längsabschnitte (2.1, 2.2) aufweist, die zum Fördern und Aufbauen von Druck in der Kunststoffschmelze eingerichtet sind, wobei sich die ersten und zweiten Längsabschnitte abwechseln, wobei die zweiten Längsabschnitte ausgestaltet sind, derart Druck aufzubauen, dass Druckverluste aufgrund der ersten Längsabschnitte (2.1, 2.2) oder aufgrund anderer Durchmischungsstrukturen der Extrusionsvorrichtung ausgeglichen werden und wobei der zweite Extruder ferner ausgestaltet ist, den Druck vor dem zweiten Extruder (40) nur über die Drehzahl des zweiten Extruders (40), nicht jedoch durch den Druck an der Auslassdüse (50) zu bestimmen, wobei die Extrusionsvorrichtung ferner umfasst:
- einen Verbindungsextruder (130) als Verbindung zwischen dem ersten Extruder (120) und dem zweiten Extruder (140), der als Mischerextruder ausgeführt ist und eingerichtet ist, Anteile der Kunststoffschmelze, die an unterschiedlichen Radialpositionen vorliegen, zu mischen und die Kunststoffschmelze von dem ersten Extruder (120) zu dem zweiten Extruder (140) zu fördern; oder
- eine Schmelzeleitung (230), die den ersten Extruder (20) mit dem zweiten Extruder (40) verbindet, wobei eine Homogenisierungsvorrichtung von Mischelementen innerhalb der Schmelzeleitung (230) vorgesehen wird, wobei die Mischelemente eingerichtet sind, Anteile der Kunststoffschmelze, die an unterschiedlichen Radialpositionen vorliegen, zu vermischen; oder
- die Extruderschneckenvorrichtung (130) des zweiten Extruders (40) mit einer Homogenisierungsvorrichtung ausgestattet ist, die eingerichtet ist, Anteile der Kunststoffschmelze, die an unterschiedlichen Radialpositionen vorliegen, vor dem Zuführen zu der Auslassdüse in dem zweiten Extruder zu mischen.

8. Extrusionsvorrichtung nach Anspruch 7, wobei die Extruderschneckenvorrichtung (122, 132) des zweiten Extruders (140), eine Extruderschneckenvorrichtung (122, 132) des ersten Extruders (120) oder eine Extruderschneckenvorrichtung eines die Auslassdüse (50) aufweisenden Endabschnitts des zweiten Extruders (140), der insbesondere von der Extruderschneckenvorrichtung des restlichen zweiten Extruders getrennt ist, mehrere Schneckenspindeln (134) umfasst, die koaxial zur Längsachse der Extruderschneckenvorrichtung (132) verteilt sind.

9. Extrusionsvorrichtung nach Anspruch 7 oder 8, wobei die Schmelzeleitung eine Temperierungsvorrichtung aufweist, die Wärme aus in der Schmelzeleitung befindliche Kunststoffschmelze aufnimmt oder dieser zuführt.

## Claims

1. Method for producing a foamed body by extrusion, comprising:
- generating a plastics melt within a casing (131) of a first extruder (20); and
- conveying the plastics melt to an outlet nozzle (50) of a second extruder (40), which has an extruder screw apparatus (142), wherein the conveyed plastics melt has foaming agent and expands after having been conducted through the outlet nozzle (50), wherein, in first length sections (1.1, 1.2) of the extruder screw apparatus (142) of the second extruder (40), the plastics melt is conveyed and/or mixed, and, in second length sections (2.1, 2.2) of the extruder screw apparatus (142) of the second extruder (40), the plastics melt is conveyed and pressure is built up in the plastics melt, wherein the plastics melt is guided alternately through first and second length sections (1.1 - 2.2), and thus, before the plastics melt is guided through the outlet nozzle (50), temperature differences between different radial positions in the cross section of the plastics melt are reduced, and the plastics melt thermally homogenized in this way is conducted through the outlet nozzle (50), and wherein the drive (222) for the first extruder (20) and the drive (242) for the second extruder (40) are not directly connected with one another in motion-transmitting fashion and are operated individually, wherein the second length sections build up pressure such that pressure losses owing to the first sections or owing to other mixing structures are compensated for and whereby, furthermore, the pressure upstream of the second extruder (40) is determined only by way of the rotational speed of the second extruder (40), but not by the pressure at the outlet nozzle, and, furthermore, fractions of the plastics melt which are present at different radial positions are mixed before the plastics melt is fed to the second extruder (40), wherein
- the fractions, before being fed to the second extruder (40), are mixed in the first extruder (20) by means of a homogenization apparatus of an extruder screw apparatus of the first extruder;
- the fractions, before being fed to the second extruder (40), are mixed in a melt line (230) through which the plastics melt is conducted from the first extruder (20) to the second extruder (40), wherein, in the melt line, there are provided mixing elements which mix the fractions in the melt line (230), and/or the melt line (230) has a temperature control apparatus which absorbs heat from or supplies heat to plastics melt situated in the melt line (230); and/or
- the fractions, before being fed to the second extruder (40), are mixed in a connecting extruder (130) which conveys the plastics melt from the first extruder (120) to the second extruder (140) and which in particular conveys the plastics melt by way of multiple screw spindles (134) which are distributed coaxially with respect to the longitudinal axis of the connecting extruder (130), and/or
wherein fractions of the plastics melt situated at different radial positions are mixed before the plastics melt passes through the outlet nozzle (50) of the second extruder (40), wherein
- the fractions, before being fed to the outlet nozzle (50), are mixed in the second extruder (40) by means of a homogenization apparatus of an extruder screw apparatus of the second extruder (40);
- the fractions, before being fed to the outlet nozzle (50), are mixed in a connection (52) through which the plastics melt is fed to the outlet nozzle (50), wherein, in the connection (52), there are provided mixing elements which mix the fractions connection (52), and/or the connection (52) has a temperature control apparatus which absorbs heat from or supplies heat to plastics melt situated in the connection, wherein the connection is in particular designed as a melt line (230); and/or
- the fractions, before being fed to the outlet nozzle (50), are mixed in the connection (52), which is designed as a connecting extruder (130) as part of an end section of the second extruder (40), wherein the connection (52) feeds the plastics melt from that section of the second extruder (40) which is situated upstream of the end section to the outlet nozzle (50) which, like the connection (52), belongs to the end section of the second extruder (40), wherein, within the connection (52), an extruder screw apparatus (132), in particular with multiple screw spindles, conveys the plastics melt.

2. Method according to Claim 1, wherein the first and second length sections (1.1, 1.2; 2.1, 2.2), through which plastics melt is conducted in alternation, directly adjoin one another, such that no region of the screw is without a screw thread or screw web which extends as far as the casing of the second extruder.

3. Method according to one of the preceding claims, wherein, in the first and/or second extruder (20,40), the plastics melt is conveyed by means of multiple screw spindles (134) which are distributed coaxially with respect to the longitudinal axis of the first and/or second extruder (130).

4. Method according to Claim 1 or 3, wherein the screw spindles (134) rotate about their own respective axis, the envelope curves of the screw spindles do not overlap, and the axes of the screw spindles rotate jointly about the axis of an extruder screw apparatus (132) in which the screw spindles (134) are at least partially recessed.

5. Method according to one of the preceding claims, wherein, furthermore, the temperature differences between different radial positions in the cross section of the plastics melt are reduced through temperature control of the plastics melt, in particular by cooling of the plastics melt within the second extruder (40).

6. Method according to Claim 5, wherein the temperature control of the plastics melt comprises at least one of the following steps:
- exchange of heat between the plastics melt, on the one hand, and the casing of the first extruder (20), and/or a casing of the second extruder (40), on the other hand; and/or
- exchange of heat between the plastics melt, on the one hand, and an extruder screw apparatus (130), which generates or conveys the plastics melt in the first and/or second extruder (20, 40), on the other hand.

7. Extrusion apparatus (10) for producing a foamed body by a method according to one of the preceding claims, wherein the extrusion apparatus comprises:
- a first extruder (20) having an introduction region which has an introduction duct designed for the feed of plastics particles;
- a second extruder (40) having an outlet region which has an outlet nozzle (50);
wherein the extrusion apparatus (10) comprises a drive (222) for the first extruder (220) and a drive (242) for the second extruder (240), which drives are not directly connected to one another in motion-transmitting fashion and can be operated individually,
wherein the second extruder (40) is equipped with at least one extruder screw apparatus (130) which has first length sections (1.1, 1.2) designed for conveying and/or mixing the plastics melt and which has second length sections (2.1, 2.2) which are designed for conveying, and building up pressure in, the plastics melt, wherein the first and second length sections alternate, wherein the second length sections are designed to build up pressure such that pressure losses owing to the first length sections (2.1, 2.2) or owing to other mixing structures of the extrusion apparatus are compensated for, and wherein the second extruder is furthermore designed to determine the pressure upstream of the second extruder (40) only by means of the rotational speed of the second extruder (40) but not by means of the pressure at the outlet nozzle (50), wherein the extrusion apparatus furthermore comprises:
- a connecting extruder (130) as a connection between the first extruder (120) and the second extruder (140), which is designed as a mixing extruder and which is configured to mix fractions of the plastics melt which are present at different radial positions and to convey the plastics melt from the first extruder (120) to the second extruder (140); or
- a melt line (230) which connects the first extruder (20) to the second extruder (40), wherein a homogenization apparatus of mixing elements within the melt line (230) is provided, wherein the mixing elements are configured to mix fractions of the plastics melt which are present at different radial positions; or
- the extruder screw apparatus (130) of the second extruder (40) is equipped with a homogenization apparatus which is configured to mix fractions of the plastics melt which are present at different radial positions before said fractions are fed to the outlet nozzle in the second extruder.

8. Extrusion apparatus according to Claim 7, wherein the extruder screw apparatus (122, 132) of the second extruder (140), an extruder screw apparatus (122, 132) of the first extruder (120) or an extruder screw apparatus of an end section, which has the outlet nozzle (50), of the second extruder (140), which is, in particular, separate from the extruder screw apparatus of the rest of the second extruder, comprises multiple screw spindles (134) which are distributed coaxially with respect to the longitudinal axis of the extruder screw apparatus (132).

9. Extrusion apparatus according to Claim 7 or 8, wherein the melt line has a temperature control apparatus which absorbs heat from or supplies heat to plastics melt situated in the melt line.

## Revendications

1. Procédé de fabrication d'un corps de mousse par extrusion, comportant :
- la génération d'une masse fondue de matière plastique à l'intérieur d'une enveloppe (131) d'une première extrudeuse (20) ; et
- le transport de la masse fondue de matière plastique vers une buse de sortie (50) d'une deuxième extrudeuse (40) qui comprend un dispositif à vis sans fin d'extrudeuse (142), la masse fondue de matière plastique transportée comprenant un agent gonflant et s'expansant après être passée à travers la buse de sortie (50), la masse fondue de matière plastique étant transportée et/ou mélangée dans des premières parties longitudinales (1.1, 1.2) du dispositif à vis sans fin d'extrudeuse (142) de la deuxième extrudeuse (40) et étant transportée dans des deuxièmes parties longitudinales (2.1, 2.2) du dispositif à vis sans fin d'extrudeuse (142) de la deuxième extrudeuse (40) et une pression étant établie dans la masse fondue de matière plastique, la masse fondue de matière plastique étant guidée en alternance à travers des premières et deuxièmes parties longitudinales (1.1 - 2.2) et ainsi, avant le guidage de la masse fondue de matière plastique à travers la buse de sortie (50), des différences de température entre différentes positions radiales dans la section transversale de la masse fondue de matière plastique étant réduites et la masse fondue de matière plastique ainsi homogénéisée thermiquement étant guidée à travers la buse de sortie (50), et l'entraînement (222) pour la première extrudeuse (20) et l'entraînement (242) pour la deuxième extrudeuse (40) n'étant pas reliés directement l'un à l'autre avec transmission de mouvement et fonctionnant individuellement, les deuxièmes parties longitudinales établissant une pression de telle sorte que des pertes de pression dues aux premières parties ou dues à d'autres structures de mélange soient compensées et de sorte qu'en outre la pression avant la deuxième extrudeuse (40) ne soit déterminée que par le biais de la vitesse de rotation de la deuxième extrudeuse (40) mais pas par le biais de la pression au niveau de la buse de sortie, et en outre les parts de la masse fondue de matière plastique qui se trouvent en différentes positions radiales étant mélangées avant que la masse fondue de matière plastique soit acheminée à la deuxième extrudeuse (40),
- les parts, avant l'acheminement à la deuxième extrudeuse (40), étant mélangées dans la première extrudeuse (20) au moyen d'un dispositif d'homogénéisation d'un dispositif à vis sans fin d'extrudeuse de la première extrudeuse ;
- les parts, avant l'acheminement à la deuxième extrudeuse (40), étant mélangées dans une conduite à masse fondue (230) à travers laquelle est guidée la masse fondue de matière plastique de la première extrudeuse (20) à la deuxième extrudeuse (40), des éléments mélangeurs étant prévus dans la conduite à masse fondue, lesquels mélangent les parts dans la conduite à masse fondue (230) et/ou la conduite à masse fondue (230) comprenant un dispositif d'équilibrage thermique qui absorbe de la chaleur de la masse fondue de matière plastique qui se trouve dans la conduite à masse fondue (230) ou qui lui en amène ; et/ou
- les parts, avant l'acheminement à la deuxième extrudeuse (40), étant mélangées dans une extrudeuse de raccordement (130) qui transporte la masse fondue de matière plastique de la première extrudeuse (120) à la deuxième extrudeuse (140), et qui transporte en particulier la masse fondue de matière plastique au moyen de plusieurs broches de vis sans fin (134) qui sont distribuées coaxialement à l'axe longitudinal de l'extrudeuse de raccordement (130), et/ou des parts de la masse fondue de matière plastique qui se trouvent en différentes positions radiales étant mélangées avant que la masse fondue de matière plastique passe à travers la buse de sortie (50) de la deuxième extrudeuse (40),
- les parts, avant l'acheminement à la buse de sortie (50), étant mélangées dans la deuxième extrudeuse (40) au moyen d'un dispositif d'homogénéisation d'un dispositif à vis sans fin d'extrudeuse de la deuxième extrudeuse (40) ;
- les parts, avant l'acheminement à la buse de sortie (50), étant mélangées dans un raccordement (52) à travers lequel la masse fondue de matière plastique est acheminée à la buse de sortie (50), des éléments mélangeurs étant prévus dans le raccordement (52), lesquels mélangent les parts dans le raccordement (52) et/ou le raccordement (52) comprenant un dispositif d'équilibrage thermique qui absorbe de la chaleur de la masse fondue de matière plastique qui se trouve dans le raccordement ou qui lui en amène, le raccordement étant réalisé en particulier sous forme de conduite à masse fondue (230) ; et/ou
- les parts, avant l'acheminement à la buse de sortie (50), étant mélangées dans le raccordement (52) qui est réalisé en tant qu'extrudeuse de raccordement (130) comme partie d'une portion d'extrémité de la deuxième extrudeuse (40), le raccordement (52) acheminant à la buse de sortie (50) la masse fondue de matière plastique à partir de la portion de la deuxième extrudeuse (40) qui se trouve avant la portion d'extrémité, laquelle buse de sortie appartient, comme le raccordement (52), à la portion d'extrémité de la deuxième extrudeuse (40), un dispositif à vis sans fin d'extrudeuse (132), en particulier doté de plusieurs broches de vis sans fin, transportant la masse fondue de matière plastique à l'intérieur du raccordement (52).

2. Procédé selon la revendication 1, dans lequel les premières et deuxièmes parties longitudinales (1.1, 1.2 ; 2.1, 2.2), à travers lesquelles la masse fondue de matière plastique est guidée en alternance, sont directement adjacentes les unes aux autres, de sorte qu'aucune région de la vis sans fin ne soit dépourvue de filet de vis ou de crête de vis s'étendant jusqu'à l'enveloppe de la deuxième extrudeuse.

3. Procédé selon l'une des revendications précédentes, dans lequel, dans la première et/ou la deuxième extrudeuse (20, 40), la masse fondue de matière plastique est transportée au moyen de plusieurs broches de vis sans fin (134), lesquelles sont distribuées coaxialement à l'axe longitudinal de la première ou de la deuxième extrudeuse (130).

4. Procédé selon la revendication 1 ou 3, dans lequel les broches de vis sans fin (134) tournent respectivement autour de leur propre axe, les courbes enveloppantes des broches de vis sans fin ne se chevauchent pas, et les axes des broches de vis sans fin tournent conjointement autour de l'axe d'un dispositif à vis sans fin d'extrudeuse (132) dans lequel les broches de vis sans fin (134) sont au moins partiellement encastrées.

5. Procédé selon l'une des revendications précédentes, dans lequel les différences de température entre différentes positions radiales dans la section transversale de la masse fondue de matière plastique sont en outre réduites par un équilibrage thermique de la masse fondue de matière plastique, en particulier par refroidissement de la masse fondue de matière plastique à l'intérieur de la deuxième extrudeuse (40).

6. Procédé selon la revendication 5, dans lequel l'équilibrage thermique de la masse fondue de matière plastique comporte au moins l'une des étapes suivantes :
- l'échange de chaleur entre la masse fondue de matière plastique d'une part et l'enveloppe de la première extrudeuse (20) et/ou une enveloppe de la deuxième extrudeuse (40) d'autre part ; et/ou
- l'échange de chaleur entre la masse fondue de matière plastique d'une part et un dispositif à vis sans fin d'extrudeuse (130), qui génère ou transporte la masse fondue de matière plastique dans la première et/ou la deuxième extrudeuse (20, 40) d'autre part.

7. Dispositif d'extrusion (10) destiné à fabriquer un corps de mousse conformément à un procédé selon l'une des revendications précédentes, le dispositif d'extrusion comportant :
- une première extrudeuse (20) dotée d'une région d'introduction qui comprend un canal d'introduction conçu pour acheminer des particules de matière plastique ;
- une deuxième extrudeuse (40) dotée d'une région de sortie qui comprend une buse de sortie (50) ;
le dispositif d'extrusion (10) comportant un entraînement (222) pour la première extrudeuse (220) et un entraînement (242) pour la deuxième extrudeuse (240), lesquels ne sont pas reliés directement l'un à l'autre avec transmission de mouvement et peuvent fonctionner individuellement,
la deuxième extrudeuse (40) étant équipée d'au moins un dispositif à vis sans fin d'extrudeuse (130) qui comprend des premières parties longitudinales (1.1, 1.2) qui sont conçues pour le transport et/ou le mélange de la masse fondue de matière plastique, et des deuxièmes parties longitudinales (2.1, 2.2) qui sont conçues pour le transport et l'établissement d'une pression dans la masse fondue de matière plastique, les premières et les deuxièmes parties longitudinales étant alternées, les deuxièmes parties longitudinales étant configurées pour établir un pression de telle sorte que des pertes de pression dues aux premières parties longitudinales (2.1, 2.2) ou dues à d'autres structures de mélange du dispositif d'extrusion soient compensées et la deuxième extrudeuse étant en outre configurée pour ne déterminer la pression avant la deuxième extrudeuse (40) que par le biais de la vitesse de rotation de la deuxième extrudeuse (40) mais pas par le biais de la pression au niveau de la buse de sortie (50), le dispositif d'extrusion comportant en outre :
- une extrudeuse de raccordement (130) en tant que raccordement entre la première extrudeuse (120) et la deuxième extrudeuse (140), laquelle est réalisée comme extrudeuse de mélange et est conçue pour mélanger des parts de la masse fondue de matière plastique qui se trouvent à différentes positions radiales et pour transporter la masse fondue de matière plastique de la première extrudeuse (120) à la deuxième extrudeuse (140) ; ou
- une conduite à masse fondue (230) qui relie la première extrudeuse (20) à la deuxième extrudeuse (40), un dispositif d'homogénéisation d'éléments de mélange étant prévu à l'intérieur de la conduite à masse fondue (230), les éléments de mélange étant conçus pour mélanger des parts de la masse fondue de matière plastique qui se trouvent à différentes positions radiales ; ou
- le dispositif à vis sans fin d'extrusion (130) de la deuxième extrudeuse (40) est équipé d'un dispositif d'homogénéisation qui est conçu pour mélanger des parts de la masse fondue de matière plastique qui se trouvent à différentes positions radiales, avant l'acheminement jusqu'à la buse de sortie dans la deuxième extrudeuse.

8. Dispositif d'extrusion selon la revendication 7, dans lequel le dispositif à vis sans fin d'extrudeuse (122, 132) de la deuxième extrudeuse (140), un dispositif à vis sans fin d'extrudeuse (122, 132) de la première extrudeuse (120) ou un dispositif à vis sans fin d'extrudeuse d'une portion d'extrémité de la deuxième extrudeuse (140) comprenant la buse de sortie (50), laquelle portion d'extrémité est séparée en particulier du dispositif à vis sans fin d'extrudeuse de la deuxième extrudeuse restante, comporte plusieurs broches de vis sans fin (134) qui sont distribuées coaxialement à l'axe longitudinal du dispositif à vis sans fin d'extrudeuse (132).

9. Dispositif d'extrusion selon la revendication 7 ou 8, dans lequel la conduite à masse fondue comprend un dispositif d'équilibrage thermique qui absorbe de la chaleur de la masse fondue de matière plastique qui se trouve dans la conduite à masse fondue ou qui lui en amène.
